# EUROPEAN PATENT APPLICATION

(11) **EP 1 447 868 A1**
(43) Date of publication of application: **18.08.2004**
(21) Application number: 02803504.6
(22) Date of filing: 15.11.2002
(51) Int. Cl.: H01M 6/16, H01M 4/06, H01M 4/52, H01M 4/62, C01G 53/04

(54) **NON-AQUEOUS PRIMARY BATTERY**

(30) Priority: 22.11.2001 JP 2001357541; 22.11.2001 JP 2001357545; 22.11.2001 JP 2001357548
(71) Applicant: Sony Corporation, Tokyo 141-0001 (JP)
(72) Inventor: YAMAMOTO, Kenta c/o SONY CORPORATION, Shinagawa-ku, Tokyo 141-0001 (JP)
(74) Representative: Müller, Frithjof E., Dipl.-Ing.
(86) International application number: PCT/JP2002/011967
(87) International publication number: WO 2003/044883

(57) **Abstract**

A non-aqueous primary cell intended to increase the discharge capacity and lower the operating voltage while reducing the size and weight is provided.

A non-aqueous primary cell contains a positive active material containing nickel oxyhydroxide as a main component and a negative active material composed of a light metal, and a non-aqueous electrolyte. The positive and negative active materials are disposed between a positive terminal and a negative terminal while being separated from each other by means of a separator. A positive mix forming said positive active material contains at least a conductive agent and a binder. The content of said conductive agent is in a range of 5 to 30 wt% on the basis of the total weight of said positive mix, and the content of said binder is in a range of 1 to 10 wt% on the total weight of said positive mix. With this configuration, it is possible to realize a non-aqueous primary cell capable of increasing the discharge capacity, lowering the operating voltage, and shortening the time required for preliminary discharge.

## Description

### Technical Field

The present invention relates to a non-aqueous primary cell usable, for example, as a power source for compact portable electronics and replaceable from an alkaline manganese cell or an alkali secondary cell.

### Background Art

In recent years, compact portable electronics such as portable game machines and portable digital' cameras have remarkably come into wide use, and may become increasingly popular in the future. Along with such a tendency, it is envisaged that demands for primary cells and secondary cells as power sources for such electronics may be rapidly spread, and simultaneously it is required to develop high performance cells.

Portable electronics such as portable game machines and portable digital cameras are generally high in operating voltage and accordingly require a large current, and to meet such a requirement, cells as power sources therefor must be excellent in discharge characteristic at heavy loads.

Portable electronics also have a tendency toward the reduced size and weight and the improved performances, and to meet such a tendency, cells as power sources therefor are expected to attain the reduced size and weight as well as the improved sustention of characteristics.

In other words, it is required for cells as power sources for portable electronics to attain a larger capacity per weight (mAh/g) or capacity per volume (mAh/cm³) of each of a positive active material or negative active material for forming a cell.

To meet such a requirement, there has been proposed a nickel-zinc cell characterized by using nickel oxyhydroxide as a positive active material and zinc as a negative active material. Such a nickel-zinc cell is higher in operating voltage than a general alkaline-manganese cell, and therefore, superior in heavy load characteristics to the alkaline-manganese cell.

On the other hand, with respect to portable electronics, there is a tendency to reduce the operating voltage year by year for reducing the power consumption and lowering heat generation. For example, MPUs for computers have been generally operated at an operating voltage of about 1.5 V; however, in recent years, there appears an MPU for a computer operable at an operating voltage of about 1.0 V, and further, it is expected that the operating voltage of an MPU may be more reduced in the future. From this viewpoint, it is also required to reduce the operating voltages of cells as power sources for portable optics.

Of the existing primary cells, those having low operating voltages are exemplified by an MnO₂/Zn based cell and an Ag₂O/Zn based cell using an electrolytic solution, and a FeS₂/Li based cell using an organic solvent for an electrolytic solution. Such primary cells, however, have problems associated with a small capacity per weight (mAh/g) of a positive active material and a very large volume expansion after discharge, and are therefore undesirable in terms of increasing the capacities of the cells.

The above-described primary cells have a further problem that since the voltage at the initial discharge of the cell is as large as 1.8 to 1.5 V, the cells fail to sufficiently satisfy the future need for reduction in voltage.

To solve the above-described problems of the related art primary cells, the present invention has been made, and an object of the present invention is to provide a primary cell capable of increasing the discharge capacity and lowering the operating voltage while reducing the size and weight of the cell.

### Disclosure of Invention

A non-aqueous primary cell contains a positive active material containing nickel oxyhydroxide as a main component and a negative active material composed of a light metal, and a non-aqueous electrolyte. The positive and negative active materials are disposed between a positive terminal and a negative terminal while being separated from each other by means of a separator.

The nickel oxyhydroxide may be β-type nickel oxyhydroxide having an approximately spherical particle shape. With this configuration, it is possible to obtain a cell capable of lowering the operating voltage and increasing the discharge capacity while reducing the size and weight. A specific amount of zinc or yttrium may be dissolved as a solid-solution in the β-type nickel oxyhydroxide having an approximately spherical particle shape by chemical oxidization. With this configuration, it is possible to further improve the discharge capacity.

The positive active material may contain the β-type nickel oxyhydroxide in which a specific amount of either of cobalt, copper, and neodymium is dissolved as a solid-solution. With this configuration, it is possible to significantly increase the discharge capacity, and hence to reduce the size and weight of the cell and lower the operating voltage.

The nickel oxyhydroxide may be γ-type nickel oxyhydroxide having an approximately spherical particle shape. With this configuration, it is possible to provide a cell capable of reducing deterioration of the self-discharge/sustention characteristic, lowering the operating voltage, and increasing the capacity while reducing the size and weight. The particle distribution of the γ-type nickel oxyhydroxide having an approximately spherical particle shape may be in a range of 5 to 70µm, and an average particle size thereof may be in a range of 15 to 25µm. With this configuration, it is possible to further increase the discharge capacity.

A positive mix forming the positive active material may contain at least a conductive agent and a binder. In this case, by specifying the content of the conductive agent in a range of 5 to 30 wt% on the basis of the total weight of the positive mix and the content of the binder in a range of 1 to 10 wt% on the total weight of the positive mix, it is possible to obtain a cell capable of lowering the operating voltage and increasing the discharge capacity while reducing the size and weight, and by specifying the content of the binder in a range of 1 to 10 wt% on the total weight of said positive mix and the content of the conductive agent in a range of 5 to 30 wt% on the basis of the total weight of the positive mix, it is possible to improve the discharge capacity and shorten the time required for preliminary discharge without reducing the discharge capacity in a low potential region.

### Brief Description of Drawings

FIG. 1 is a schematic sectional view showing a coin cell according to an embodiment of the present invention;
FIG. 2 is an electron micrograph of nickel oxyhydroxide having an approximately spherical particle shape used for the embodiment;
FIG. 3 is an electron micrograph of nickel oxyhydroxide having a rock-like (non-spherical) particle shape;
FIG. 4 is a graph showing a change in discharge capacity at a constant current of 1 mA for each of coin cells prepared in Example 1 and Comparative Example 1 according to the embodiment of the present invention;
FIG. 5 is a graph showing a change in discharge capacity at a constant current of 5 mA for each of the coin cells prepared in Example 1 and Comparative Example 1;
FIG. 6 is a graph showing a change in discharge capacity depending on the solid-solution amount of zinc for each of coin cells prepared in Examples 1-2 to 1-15 according to the embodiment of the present invention;
FIG. 7 is a graph showing a change in discharge capacity depending on the solid-solution amount of zinc at a constant current of 1 mA for each of the coin cells prepared in Examples 1-1, 1-2, 1-11, and 1-14;
FIG. 8 is a graph showing a change in discharge capacity depending on the solid-solution amount of zinc at a constant current of 5 mA for each of the coin cells prepared in Examples 1-1, 1-2, 1-11, and 1-14;
FIG. 9 is a graph showing a change in discharge capacity depending on the solid-solution amount of yttrium for each of coin cells prepared in Examples 2-2 to 2-13 according to another embodiment of the present invention;
FIG. 10 is a graph showing a change in discharge capacity depending on the solid-solution amount of yttrium at a constant current of 1 mA for each of the coin cells prepared in Examples 2-1, 2-2, 2-5, 2-9, and 2-13;
FIG. 11 is a graph showing a change in discharge capacity depending on the solid-solution amount of yttrium at a constant current of 5 mA for each of the coin cells prepared in Examples 2-1, 2-2, 2-5, 2-9, and 2-13;
FIG. 12 is a graph showing a change in discharge capacity depending on the solid-solution amount of cobalt at each of constant currents of 1 mA and 5 mA for each of coin cells using a positive active material containing cobalt dissolved as a solid-solution according to a further embodiment;
FIG. 13 is a graph showing a change in discharge capacity at a constant current of 1 mA for each of coin cells prepared in Examples 3-3 and 3-7 and Comparative Examples 3-1, 3-2, and 3-7 according to the embodiment of the present invention;
FIG. 14 is a graph showing a change in discharge capacity at a constant current of 5 mA for each of the coin cells prepared in Examples 3-3 and 3-7 and Comparative Examples 3-2, 3-2, and 3-7 according to the embodiment of the present invention;
FIG. 15 is a graph showing a change in discharge capacity at each of constant currents of 1 mA and 5 mA for each of coin cells using a positive active material containing copper dissolved as a solid-solution according to a further embodiment of the present invention;
FIG. 16 is a graph showing a change in discharge capacity at a constant current of 1 mA for each of coin cells prepared in Examples 3-15, 3-20, and 3-23, and Comparative Example 3-2;
FIG. 17 is a graph showing a change in discharge capacity at a constant current of 5 mA for each of the coin cells prepared in Examples 3-15, 3-20, and 3-23, and Comparative Example 3-2;
FIG. 18 is a graph showing a change in discharge capacity at each of constant currents of 1 mA and 5 mA for each of coin cells using a positive active material containing neodymium dissolved as a solid-solution according to a further embodiment of the present invention;
FIG. 19 is a graph showing a change in discharge capacity at a constant current of 1 mA for each of coin cells prepared in Examples 3-27 and 3-30, and Comparative Example 3-2;
FIG. 20 is a graph showing a change in discharge capacity at a constant current of 5 mA for each of the coin cells prepared in Examples 3-27 and 3-30, and Comparative Example 3-2;
FIG. 21 is a graph showing a change in discharge capacity at a constant current of 1 mA for each of coin cells prepared in Example 4-1 and Comparative Examples 4-1 to 4-3 according to a further embodiment of the present invention;
FIG. 22 is a graph showing a change in discharge capacity at a constant current of 5 mA for each of the coin cells prepared in Example 4-1 and Comparative Examples 4-1 to 4-3;
FIG. 23 is a graph showing a change in discharge capacity at a constant current of 1 mA for each of coin cells prepared in Examples 5-1, 5-6, and 5-8, and Comparative Example 5-1 according to a further embodiment of the present invention;
FIG. 24 is a graph showing a change in discharge capacity at a constant current of 5 mA for each of the coin cells prepared in Examples 5-1, 5-6, and 5-8, and Comparative Example 5-1;
FIG. 25 is a graph showing a. change in discharge capacity depending on the amount of a graphite powder for each of coin cells prepared in Examples 5-1 to 5-8 and Comparative Examples 5-1 to 5-10;
FIG. 26 is a graph showing a change in discharge capacity at a constant current of 1 mA for each of coin cells prepared in Examples 5-11, 5-17, and Comparative Examples 5-11 and 5-22;
FIG. 27 is a graph showing a change in discharge capacity in a high potential region for each of coin cells prepared in Examples 5-9 to 5-17 and Comparative Examples 5-11 to 5-22; and
FIG. 28 is a graph showing a change in discharge capacity in a low potential region for each of the coin cells prepared in Examples 5-9 to 5-17 and Comparative Examples 5-11 to 5-22.

### Best Mode for Carrying out the Invention

The present invention will be described in detail by way of preferred embodiments.

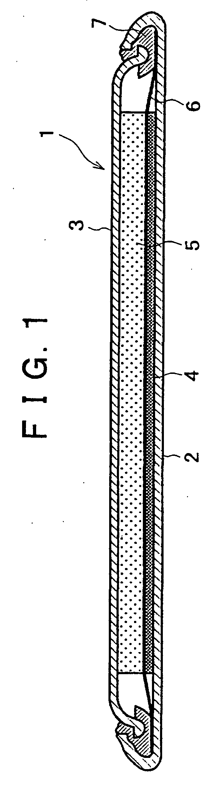

FIG. 1 is a sectional view of a coin cell 1 as one example of a non-aqueous primary cell according to the present invention.

The coin cell 1 is configured by combining a pair of a positive can 2 as a positive terminal and a negative cap 3 as a negative terminal with each other.

The coin cell 1 obtained by combining the positive can 2 with the negative cap 3 contains a positive pellet 4 as a positive active material and a negative active material 5 composed of a light metal. The positive pellet 4 is obtained by pressing a positive mix supported by a metal mesh (not shown) into a disk-shape, wherein the positive mix includes β-type nickel oxyhydroxide (β-NiOOH), a conductive agent, and a binder. The positive pellet 4 is disposed in electric-contact with the positive can 2 as the positive terminal, whereby the positive can 2 functions as an external positive terminal.

Examples of the light metals used as the negative active material 5 include, while not particularly limited thereto, lithium (Li) or a lithium alloy containing an alloy element such as aluminum, and magnesium, sodium, potassium, calcium, and aluminum. Like the positive pellet 4, the negative active material 5 is molded into a disk-shape. The negative active material 5 is disposed in electric-contact with the negative cap 3 as the negative terminal, whereby the negative cap 3 functions as an external negative terminal.

A separator 6 is disposed between the positive pellet 4 and the negative active material 5 to prevent the positive pellet 4 as the positive active material and the negative active material 5 from being brought into electric-contact with each other.

A sealing gasket 7 is mounted on an inner peripheral edge portion of the coin cell 1. The positive can 2 and the negative cap 3 are fitted to each other via the sealing gasket 7 to be configured integrally.

The coin cell 1 using β-type nickel oxyhydroxide as the positive active material is produced by a method of disposing the positive pellet 4 in the positive can 2, placing the separator 6 on the positive pellet 4, injecting a specific amount of a non-aqueous electrolyte (electrolytic solution) in the positive can 2, disposing the negative active material 5 on the separator 6, mounting the sealing gasket 7 on the peripheral edge portion of the negative cap 3, fitting the negative cap 3 in the positive can 2 via the sealing gasket 7, and crimping the positive can 2 and the negative cap 3 to each other so as to seal a gap therebetween via the sealing gasket 7. The coin cell 1 thus produced is one of non-aqueous primary cells.

The above-described non-aqueous electrolyte may be obtained by dissolving a lithium salt as an electrolyte in an organic solvent. General examples of the organic solvents include cyclic carbonate, cyclic ester, chain carbonate, chain ester, sulfolanes, cyclic ether, chain ether, and nitriles. Specific examples thereof include propylene carbonate, ethylene carbonate, 1,2-dimethoxyethane, γ-butyrolactone, tetrahydrofuran, 2-methyltetrahydrofuran, 1,3-dioxolane, sulfolane, acetonitrile, dimethyl carbonate, methylethyl carbonate, and dipropyl carbonate. A mixed solution obtained by mixing two or more kinds of the above solvents may be used.

Examples of the non-aqueous electrolytes include a solid electrolyte, a polymer electrolyte, a non-aqueous electrolyte obtained by mixing/dissolving an electrolyte in a polymer compound, and a gel-like electrolyte obtained by mixing a non-aqueous electrolytic solution in a, polymer compound.

Examples of the lithium salts as the electrolytes include lithium perchlorate (LiClO₄), lithium hexafluorophosphate (LiPF₆), lithium tetrafluoroborate (LiBF₄), and lithium trifluoromethanesulfonate (CF₃SO₃Li).

The separator 6 may be configured as a fine porous film made from a polyolefine such as polypropylene or polyethylene.

A typical method of producing the β-type nickel oxyhydroxide is performed by chemical oxidation, for example, by oxidizing nickel hydroxide in an alkali solution containing sodium hypochlorite.

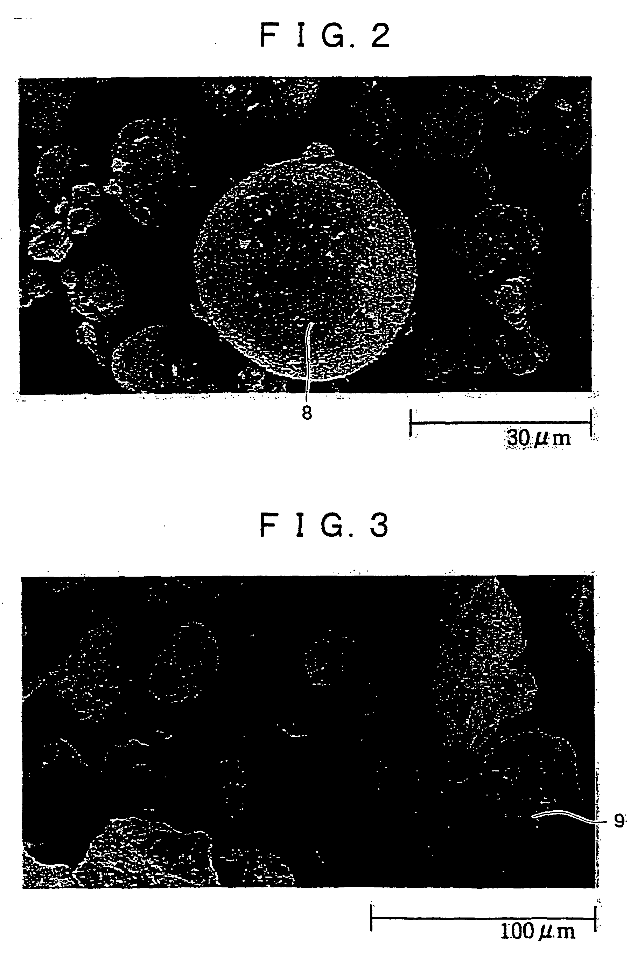

Electron micrographs of two kinds of the β-type nickel oxyhydroxides are shown in FIGS. 2 and 3. The β-type nickel oxyhydroxide (NiOOH) shown in FIG. 2 has an approximately spherical particle shape denoted by reference numeral 8, and is used for the non-aqueous primary cell according to the present invention. The β-type nickel oxyhydroxide shown in FIG. 3 has a rock-like (non-spherical) particle shape denoted by reference numeral 9, and is used for comparison with the β-type nickel oxyhydroxide having the approximately spherical particle shape 8.

### [First Embodiment]

The present invention will now be more fully described by way of examples and comparative examples.

### (Example 1-1)

A mixture of 78 wt% of the β-type nickel oxyhydroxide having the approximately spherical particle shape 8, 20 wt% of graphite as a conductive agent, and 2 wt% of polyvinylidene fluoride (PVdF) as a binder was dispersed in N-methyl-2-pyrrolidone (NMP), to obtain a positive mix slurry.

The positive mix slurry was dried at 120°C for 2 hours, to evaporate NMP, and the resultant aggregated positive mix was pulverized in a mortar into a powdery positive mix. The powdery positive mix was supported by a metal mesh made from aluminum and was pressed into a disk shape with a specific pressure, to obtain a positive pellet 4 as a positive active material having a diameter of 15.5 mm and a thickness of 250 µm.

The positive pellet 4 was disposed in a positive can 2 made from stainless steel, and a separator 6 composed of a fine porous film made from polyethylene and having a thickness of 25 µm was placed on the positive pellet 4. A non-aqueous electrolyte was prepared by adding lithium hexafluorophosphate in a mixed solvent of propylene carbonate and dimethyl carbonate at a volume ratio of 1 : 1. The concentration of the lithium hexafluorophosphate was set to 1 mol/L. A specific amount of the non-aqueous electrolyte was injected in the positive can 2.

A lithium metal was molded into a disk shape having a diameter of 15.5 mm and a. thickness of 800 µm, to form a negative active material 5. The negative active material 5 was placed on the separator 6. A sealing gasket 7 was mounted on a peripheral edge portion of a negative cap 3 made from stainless steel.

The negative cap 3 provided with the sealing gasket 7 was stacked on the positive can 2 containing the positive pellet 4, separator 6, negative active material 5, and the specific amount of the non-aqueous electrolyte, and was fitted in and crimped to the positive can 2, to produce a coin cell 1 having an outer size of 20 mm and a height of 1.6 mm.

### (Comparative Example 1-1)

A coin cell 1 was produced in the same manner as that in Example 1-1 except that the β-type nickel oxyhydroxide having the rock-like (non-spherical) particle shape 9 was used in place of the β-type nickel oxyhydroxide having the approximately spherical particle shape 8 used in Example 1-1.

The filled amounts of the positive mixes in Example 1-1 and Comparative Example 1-1 are shown in Table 1.

**Table 1**

| | Positive Electrode Material | Filled Amount of Positive Mix (g/cell) |
|---|---|---|
| Example 1-1 | Approximately Spherical β-type Nickel Oxyhydroxide | 0.1 |
| Comparative Example 1-1 | Rock-like β-type Nickel Oxyhydroxide | 0.07 |

In the case of filling a space with the positive mix, each of the tap density and bulk density of the β-type nickel oxyhydroxide having the approximately spherical particle shape 8 is higher than those of the β-type nickel oxyhydroxide having the rock-like (non-spherical) particle shape 9. Accordingly, the filled amount of the β-type nickel oxyhydroxide having the approximately spherical particle shape 8 in a specific volume becomes larger than that of the β-type nickel oxyhydroxide having the rock-like (non-spherical) particle shape 9. As a result, the content of the positive active material can be increased.

The coin cells produced in Example 1-1 and Comparative Example 1-1 have a feature that an open-circuit voltage in a state immediately after production is about 3.5 V, and the voltage is rapidly reduced by discharge, and is nearly kept at an even potential ranging from about 1.0 to 1.2 V.

Accordingly, the discharge test of the coin cell 1 for examining discharge characteristics is made in a state excluding the initial discharge portion by preliminary discharge. The preliminary discharge is performed at a constant current of 1 mA until the cell voltage becomes 1.3 V, and is left for one day.

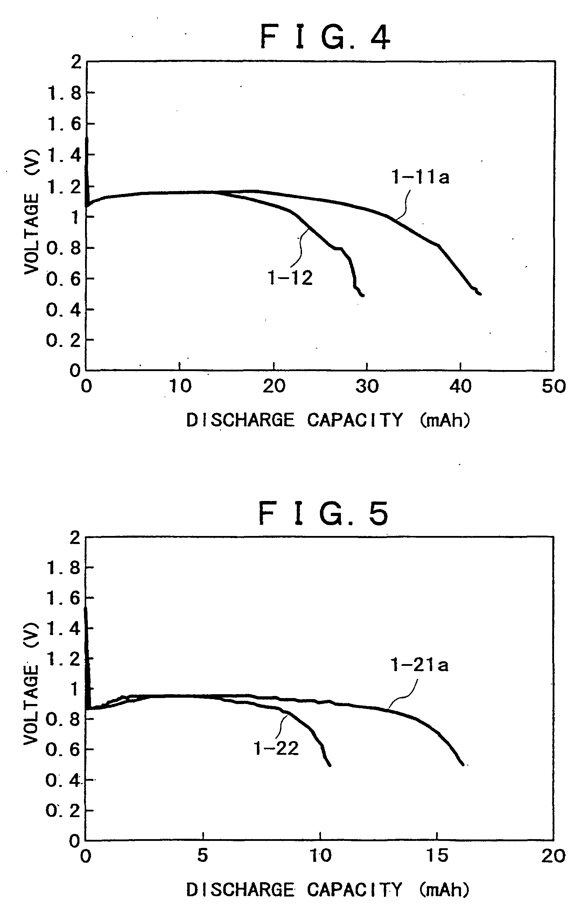

After the preliminary discharge, a discharge test is made by performing discharge at a constant current of 1 mA until the cell voltage becomes 0.5 V. A change in discharge capacity of the coin cell 1 in each of Example 1-1 and Comparative Example 1-1 in such a discharge test performed at a constant current of 1 mA was measured. The result is shown in FIG. 4. A change in discharge capacity of the coin cell 1 in each of Example 1-1 and Comparative Example 1-1 in the discharge test performed at a constant current of 5 mA was also measured. The result is shown in FIG. 5. The discharge capacity in each discharge test is shown in Table 2. In FIGS. 4 and 5, curves 1-11a and 1-21a each show the change in discharge capacity in Example 1-1, and curves 1-12 and 1-22 each show the change in discharge capacity in Comparative Example 1-1.

**Table 2**

| | Discharge Capacity (mAh) | |
|---|---|---|
| | Discharge at 1 mA | Discharge at 5 mA |
| Example 1-1 | 42.0 | 16.1 |
| Comparative Example 1-1 | 29.4 | 10.4 |

As is apparent from FIGS. 4 and 5, in either of discharge at 1m A and discharge at 5 mA, the discharge characteristic, shown by the curve 1-11a or 1-21a, of the coin cell 1 in Example 1-1. using the β-type nickel oxyhydroxide having the approximately spherical particle shape 8 as the positive active material is larger in discharge capacity than the discharge characteristic, shown by the curve 1-12 or 1-22, of the coin cell 1 in Comparative Example 1-1 using the β-type nickel oxyhydroxide having the rock-like (non-spherical) particle shape 9 as the positive active material.

As is also apparent from Table 2, the discharge capacity of the coin cell 1 in Example 1-1 using the β-type nickel oxyhydroxide having the approximately spherical particle shape 8 as the positive active material is larger than the discharge capacity of,the coin cell 1 in Comparative Example 1-1 using the β-type nickel oxyhydroxide having the rock-like (non-spherical) particle shape 9 as the positive active material.

The reason for this may be due to the fact that the filled amount of the positive mix containing the β-type nickel oxyhydroxide having the approximately spherical particle shape 8 in a specific volume with a specific pressure is larger than the filled amount of the positive mix containing the β-type nickel oxyhydroxide having the rock-like (non-spherical) particle shape 9 in the same specific volume with the same specific pressure. This shows that in the case of using the β-type nickel oxyhydroxide for a non-aqueous primary cell, it is desirable to use the β-type nickel oxyhydroxide having the approximately spherical particle shape 8.

### (Examples 1-2 to 1-15)

In these examples, the β-type nickel oxyhydroxide having the approximately spherical particle shape 8 is used as the positive active material, and zinc (Zn) is dissolved as a solid-solution in the β-type nickel oxyhydroxide having the approximately spherical particle shape 8. The content of zinc is varied in a range of 0.5 to 8.0 wt%. Each coin cell 1 was produced in the same manner as that in Example 1-1, for example, in terms of production of a positive mix, molding of a positive pellet 4, production of a negative active material 5, and interposition of a separator 6, except for the'use of the β-type nickel oxyhydroxide having the approximately spherical particle shape 8 in which a variable amount of zinc (Zn) was dissolved as a solid-solution.

To produce the β-type nickel oxyhydroxide in which zinc is dissolved as a solid-solution, nickel hydroxide in which zinc is dissolved as a solid-solution is first produced by mixing a water-solution containing nickel sulfate and zinc sulfate at a specific ratio, an ammonium compound such as ammonium sulfate, and an alkali water-solution such as sodium hydroxide, and stirring the mixture.

The β-type nickel oxyhydroxide having the approximately spherical particle shape in which zinc is dissolved as a solid-solution is produced by putting the above-described nickel hydroxide in a mixed solution of an alkali water-solution such as sodium hydroxide and an oxidizer such as sodium hypochlorite, thereby chemically oxidizing the nickel hydroxide in the mixed solution.

Since the β-type nickel oxyhydroxide in which zinc is dissolved as a solid-solution can be thus produced by dissolving zinc as a solid-solution in the β-type nickel oxyhydroxide, the method of producing the β-type nickel oxyhydroxide in which zinc is dissolved as a solid-solution is not limited to that described above but may be any other method capable of producing the β-type nickel oxyhydroxide in which zinc is dissolved as a solid-solution.

The solid-solution amount of zinc was determined by quantitatively measuring all of the metal elements by a chelatometric titration and then quantitatively measuring trace elements other than nickel by ICP (Inductively Coupled Plasma Emission Spectroscopy).

### (Comparative Examples 1-2 and 1-3)

Each coin cell 1 was produced in the same manner as that in Examples 1-2 to 1-15 except that the solid-solution amount of zinc was changed to a value in a range of 0.3 to 0.4 wt%.

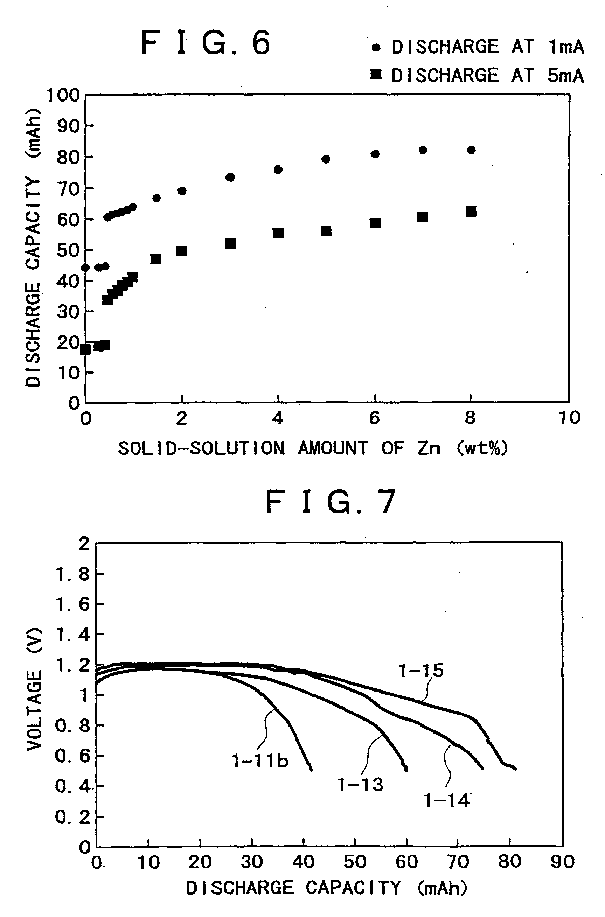

The discharge test was performed for each of the coin cells in Example 1-1 using the β-type nickel oxyhydroxide having the approximately spherical particle 8 containing no zinc dissolved as a solid-solution and Examples 1-2 to 1-15 and Comparative Examples 1-2 and 1-3 using the β-type nickel oxyhydroxide having the approximately spherical particle 8 containing a specific amount of zinc dissolved as a solid-solution. In this test, the discharge capacity upon discharge at 1 mA or 5 mA was measured. The result is shown in Table 3. A change in discharge capacity depending on the solid-solution amount of zinc (Zn) was also measured. The result is shown in FIG. 6.

**Table 3**

| | Solid-Solution Amount of Zinc (wt%) | Filled Amount of Positive Mix (g/cell) | Discharge Capacity (mAh) | |
|---|---|---|---|---|
| | | | Discharge at 1 mA | Discharge at 5 mA |
| Example 1-1 | 0.0 | 0.1 | 42.0 | 61.1 |
| Comparative Example 1-2 | 0.3 | 0.1 | 42.2 | 17.0 |
| Comparative Example 1-3 | 0.4 | 0.1 | 42.5 | 17.4 |
| Example 1-2 | 0.5 | 0.1 | 60.0 | 31.6 |
| Example 1-3 | 0.6 | 0.1 | 60.5 | 33.8 |
| Example 1-4 | 0.7 | 0.1 | 61.0 | 35.4 |
| Example 1-5 | 0.8 | 0.1 | 61.5 | 36.5 |
| Example 1-6 | 0.9 | 0.1 | 62.1 | 37.8 |
| Example 1-7 | 1.0 | 0.1 | 63.0 | 39.0 |
| Example 1-8 | 1.5 | 0.1 | 65.9 | 45.0 |
| Example 1-9 | 2.0 | 0.1 | 68.2 | 47.7 |
| Example 1-10 | 3.0 | 0.1 | 72.4 | 50.2 |
| Example 1-11 | 4.0 | 0.1 | 75.0 | 53.0 |
| Example 1-12 | 5.0 | 0.1 | 78.6 | 54.3 |
| Example 1-13 | 6.0 | 0.1 | 80.3 | 56.5 |
| Example 1-14 | 7.0 | 0.1 | 81.0 | 58.6 |
| Example 1-15 | 8.0 | 0.1 | 80.7 | 60.1 |

As is apparent from Table 3 and FIG. 6, the discharge capacity can be improved by dissolving a specific amount of zinc as a solid-solution in the β-type nickel oxyhydroxide as the positive active material, and particularly, the improvement effect in each of the coin cells in Examples 1-2 to 1-15 (solid-solution amount of zinc: 0.5 to 8.0 wt%) is larger than that in each of the coin cells in Comparative Examples 1-2 and 1-3 (solid-solution amount of zinc: 0.3 to 0.4 wt%).

In this way, it is apparent that if the solid-solution amount of zinc is less than 0.5 wt%, the effect of improving the discharge capacity is insufficient, whereas if the solid-solution amount of zinc is equal to or more than 0.5 wt%, the effect of improving the discharge capacity can be sufficiently obtained.

The mechanism for improving the discharge capacity by adding zinc is not sufficiently clarified but may be considered as follows: namely, in the case of dissolving zinc as a solid-solution in the nickel oxyhydroxide, a nickel site is replaced by zinc, and at this time, since the ion radius of zinc is larger than that of nickel, crystal of the nickel oxyhydroxide is strained by solid-solution of zinc, to thereby improve the reactivity with lithium as the negative active material.

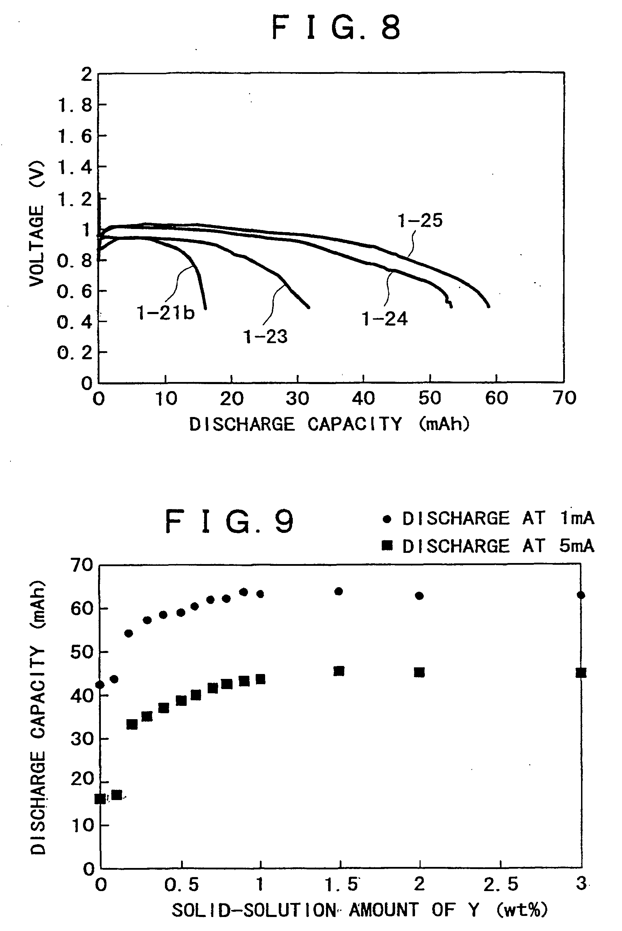

For each of the coin cells in Examples 1-1, 1-2, 1-11, and 1-14 using the β-type nickel oxyhydroxide having the approximately spherical particle 8, a change in discharge capacity depending on the solid-solution amount of zinc upon discharge at a constant current of 1 mA is shown in FIG. 7, and a change in discharge capacity depending on the solid-solution amount of zinc upon discharge at a constant current of 5 mA is shown in FIG. 8.

As is apparent from FIGS. 7 and 8, in each case of discharge at 1 mA and 5 mA, as compared with the discharge characteristic shown in a curve 1-11b or 1-21b (Example 1-1, with no zinc dissolved), the discharge characteristics shown in a curve 1-13 or 1-23 (Example 1-2, with specific amount of zinc dissolved), a curve 1-14 or 1-24 (Example 1-11, with specific amount of zinc dissolved), and a curve 1-15 or 1-25 (Example 1-14, with specific amount of zinc dissolved) become larger in discharge capacity in this order.

From the above comparison, it is also apparent that the discharge capacity is improved with an increase in solid-solution amount of zinc.

The increased solid-solution amount of zinc improves the discharge capacity; however, from the viewpoint of the present technical level, the solid-solution amount of zinc is limited to 8 wt% at maximum because the ion radius of zinc is larger than that of nickel as described above. In other words, if the solid-solution amount of zinc in a range of 8 wt% or more becomes possible, the discharge capacity can be more increased. According to the present invention, from this viewpoint, the upper limit of the solid-solution amount of zinc effective to improve the discharge capacity is not necessarily limited to 8 wt% but should be construed as limited to the possible maximum solid-solution amount of zinc.

In the case of the coin cell in Example 1-14, the discharge capacity upon discharge at a constant current of 1 mA is 81.0 mAh (Table 3), and as a result of calculation based on this discharge capacity value, the discharge capacity per filled amount (wt%) of the positive active material becomes about 1038 mAh/g (= 81.0/0.1/0.78). It is apparent to those skilled in the art that such a value is much larger than that obtained by a cell using a conventional positive material.

Accordingly, the discharge capacity of the cell specified such that the solid-solution amount of zinc in the positive active material is in a range of 0.5 to 8.0 wt% on the basis of the amount of the β-type nickel oxyhydroxide can be significantly improved as compared with that of a cell with no zinc dissolved as a solid-solution, for example, the cell in Example 1-1, and particularly, such a discharge capacity can be made very large as compared with that obtained by a cell using a conventional positive material. As a result, it is advantageous to specify the solid-solution amount of zinc to a value in a range of 0.5 to 8.0 wt%.

### [Second Embodiment]

### (Examples 2-2 to 2-13)

In these examples, the β-type nickel oxyhydroxide having the approximately spherical particle shape 8 is used as the positive active material, and yttrium (Y) is dissolved as a solid-solution in the β-type nickel oxyhydroxide having the approximately spherical particle shape 8. The content of yttrium is varied in a range of 0.2 to 3.0 wt%. Each coin cell 1 was produced in the same manner as that in Example 1, for example, in terms of production of a positive mix, molding of a positive pellet 4, production of a negative active material 5, and interposition of a separator 6, except for the use of the β-type nickel oxyhydroxide having the approximately spherical particle shape 8 in which a variable amount of yttrium was dissolved as a solid-solution.

To produce the β-type nickel oxyhydroxide in which yttrium is dissolved as a solid-solution, nickel hydroxide in which yttrium is dissolved as a solid-solution is first produced by mixing a water-solution containing nickel sulfate and yttrium sulfate at a specific ratio, an ammonium compound such as ammonium sulfate, and an alkali water-solution such as sodium hydroxide, and stirring the mixture.

The β-type nickel oxyhydroxide having the approximately spherical particle shape in which yttrium is dissolved as a solid-solution is produced by putting the above-described nickel hydroxide in a mixed solution of an alkali water-solution such as sodium hydroxide and an oxidizer such as sodium hypochlorite, thereby chemically oxidizing the nickel hydroxide in the mixed solution.

Since the β-type nickel oxyhydroxide in which yttrium is dissolved as a solid-solution can be thus produced by dissolving yttrium as a solid-solution in the β-type nickel oxyhydroxide, the method of producing the β-type nickel oxyhydroxide in which yttrium is dissolved as a solid-solution is not limited to that described above but may be any other method capable of producing the β-type nickel oxyhydroxide in which yttrium is dissolved as a solid-solution.

The solid-solution amount of yttrium was determined by quantitatively measuring all of the metal elements by a chelatometric titration and then quantitatively measuring trace elements other than nickel by ICP (Inductively Coupled Plasma Emission Spectroscopy).

### (Comparative Example 2-1)

A coin cell 1 was produced in the same manner as that in Examples 2-2 to 2-13 except that the solid-solution amount of yttrium was changed into 0.1 wt%.

The discharge test was performed for each of the coin cells in Example 2-1 using the β-type nickel oxyhydroxide having the approximately spherical particle 8 containing no yttrium dissolved as a solid-solution and Examples 2-2 to 2-13 and Comparative Example 2-1 using the β-type nickel oxyhydroxide having the approximately spherical particle 8 containing a specific amount of yttrium dissolved as a solid-solution. In this test, the discharge capacity upon discharge at 1 mA or 5 mA was measured. The result is shown in Table 4. A change in discharge capacity depending on the solid-solution amount of yttrium (Y) was also measured. The result is shown in FIG. 9.

**Table 4**

| | Solid-Solution Amount of Yttrium (wt%) | Filled Amount of Positive Mix (g/cell) | Discharge Capacity (mAh) | |
|---|---|---|---|---|
| | | | Discharge at 1 mA | Discharge at 5 mA |
| Example 2-1 | 0.0 | 0.1 | 42.0 | 16.1 |
| Comparative Example 2-1 | 0.1 | 0.1 | 43.5 | 17.1 |
| Example 2-2 | 0.2 | 0.1 | 54.2 | 32.9 |
| Example 2-3 | 0.3 | 0.1 | 57.6 | 34.8 |
| Example 2-4 | 0.4 | 0.1 | 58.7 | 36.7 |
| Example 2-5 | 0.5 | 0.1 | 59.4 | 38.0 |
| Example 2-6 | 0.6 | 0.1 | 60.5 | 39.7 |
| Example 2-7 | 0.7 | 0.1 | 62.0 | 41.2 |
| Example 2-8 | 0.8 | 0.1 | 62.4 | 42.4 |
| Example 2-9 | 0.9 | 0.1 | 63.5 | 43.1 |
| Example 2-10 | 1.0 | 0.1 | 63.4 | 43.5 |
| Example 2-11 | 1.5 | 0.1 | 63.5 | 44.8 |
| Example 2-12 | 2.0 | 0.1 | 63.2 | 45.0 |
| Example 2-13 | 3.0 | 0.1 | 63.0 | 44.6 |

As is apparent from Table 4 and FIG. 9, the discharge capacity can be improved by dissolving a specific amount of yttrium as a solid-solution in the β-type nickel oxyhydroxide as the positive active material, and particularly, the improvement effect in each of the coin cells in Examples 2-2 to 2-13 (solid-solution amount of yttrium: 0.2 to 3.0 wt%) is larger than that in the coin cell in Comparative Example 2-1 (solid-solution amount of yttrium: 0.1 wt%).

In this way, it is apparent that if the solid-solution amount of yttrium is less than 0.2 wt%, the effect of improving the discharge capacity is insufficient, whereas if the solid-solution amount of yttrium is equal to or more than 0.2 wt%, the effect of improving the discharge capacity can be sufficiently obtained.

The mechanism for improving the discharge capacity by adding yttrium is not sufficiently clarified but may be considered as follows: namely, like the case of dissolving zinc as a solid-solution in the nickel oxyhydroxide, a nickel site is replaced by yttrium, and at this time, since the ion radius of yttrium is larger than that of nickel, crystal of the nickel oxyhydroxide is strained by solid-solution of yttrium, to thereby improve the reactivity with lithium as the negative active material.

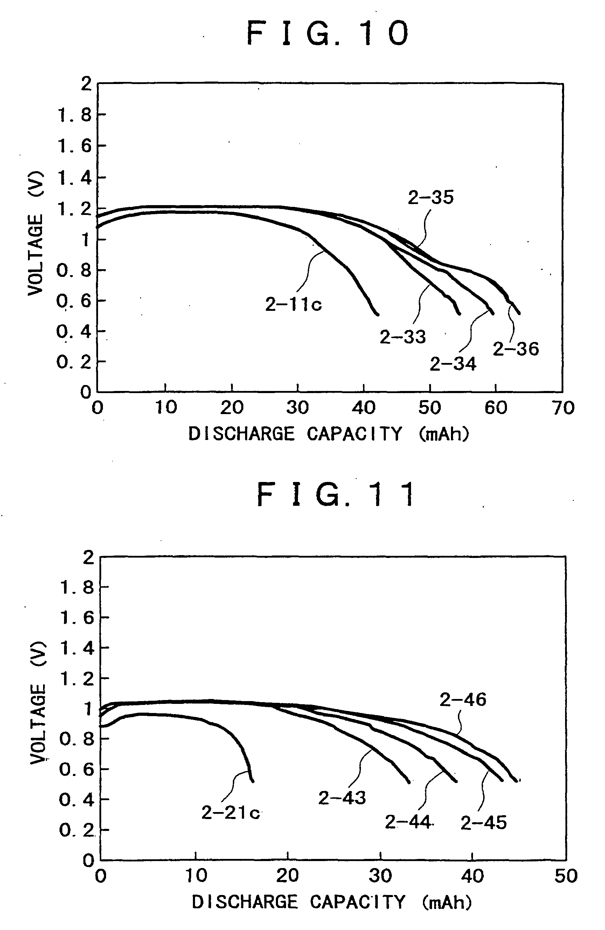

For each of the coin cells in Examples 2-1, 2-2, 2-5, 2-9, and 2-13 using the β-type nickel oxyhydroxide having the approximately spherical particle 8, a change in discharge capacity depending on the solid-solution amount of yttrium upon discharge at a constant current of 1 mA is shown in FIG. 10, and a change in discharge capacity depending on the solid-solution amount of yttrium upon discharge at a constant current of 5 mA is shown in FIG. 11.

As is apparent from FIGS. 10 and 11, in each case of discharge at 1 mA and 5 mA, as compared with the discharge characteristic shown in a curve 2-11c or 2-21c (Example 2-1, with no yttrium dissolved), the discharge characteristics shown in a curve 2-33 or 2-43 (Example 2-2, with yttrium dissolved), a curve 2-34 or 2-44 (Example 2-5, with yttrium dissolved), a curve 35 or 45 (Example 2-9, with yttrium dissolved), a curve 2-36 or 2-46 (Example 2-13, with yttrium dissolved) become larger in discharge capacity in this order. From this comparison, it is also apparent that the discharge capacity is improved with an increase in solid-solution amount of yttrium.

The increased solid-solution amount of yttrium improves the discharge capacity; however, from the viewpoint of the present technical level, the solid-solution amount of yttrium is limited to 3.0 wt% at maximum because the ion radius of yttrium is larger than that of nickel as described above. In other words, if the solid-solution amount of yttrium in a range of 3.0 wt% or more becomes possible, the discharge capacity can be more increased. According to the present invention, from this viewpoint, the upper limit of the solid-solution amount of yttrium effective to improve the discharge capacity is not necessarily limited to 3.0 wt% but should be construed as limited to the possible maximum solid-solution amount of yttrium.

In the case of the coin cell in Example 2-9, the discharge capacity upon discharge at a constant current of 1 mA is 63.5 mAh (Table 4), and as a result of calculation based on this discharge capacity value, the discharge capacity per filled amount (wt%) of the positive active material becomes about 814 mAh/g (= 63.5/0.1/0.78). It is apparent to those skilled in the art that such a value is much larger than that obtained by a cell using a conventional positive material.

Accordingly, the discharge capacity of the cell specified such that the solid-solution amount of yttrium in the positive active material is in a range of 0.2 to 3.0 wt% on the basis of the amount of the β-type nickel oxyhydroxide can be significantly improved as compared with that of a cell with no yttrium dissolved as a solid-solution, for example, the cell in Example 2-1, and particularly, such a discharge capacity can be made very large as compared with that obtained by a cell using a conventional positive material. As a result, it is advantageous to specify the solid-solution amount of yttrium to a value in a range of 0.2 to 3.0 wt%.

### [Third Embodiment (1)]

A coin cell according to this embodiment will be described below.

A positive pellet 4 used in this embodiment contains the β-type nickel oxyhydroxide (NiOOH) having the approximately spherical particle 8 shown in the electron micrograph of FIG. 2, wherein a specific amount of either of cobalt, copper, and neodymium is dissolved as a solid-solution in the β-type nickel oxyhydroxide.

A typical method of producing the β-type nickel oxyhydroxide is performed by chemical oxidation, for example, by oxidizing nickel hydroxide in an alkali solution containing sodium hypochlorite.

A difference in each of the filled amount of a positive active material and the discharge capacity between a coin cell using the β-type nickel oxyhydroxide having the approximately spherical particle 8 and a cell having the same shape using the β-type nickel oxyhydroxide having the rock-like particle shape 9 will be first described by way of Comparative Examples 3-1 and 3-2. In addition, each of the β-type nickel oxyhydroxide having the approximately spherical particle 8 and the β-type nickel oxyhydroxide having the rock-like particle shape 9 used in Comparative Examples 3-1 and 3-2 does not dissolve any one of cobalt, copper, and neodymium.

### (Comparative Example 3-1)

A mixture of 78 wt% of the β-type nickel oxyhydroxide having the rock-like (non-spherical) particle shape 9, 20 wt% of graphite as a conductive agent, and 2 wt% of polyvinylidene fluoride (PVdF) as a binder was dispersed in N-methyl-2-pyrrolidone (NMP), to obtain a positive mix slurry.

The positive mix slurry was dried at 120°C for 2 hours, to evaporate NMP, and the resultant aggregated positive mix was pulverized in a mortar into a powdery positive mix. The powdery positive mix was supported by a metal mesh made from aluminum and was pressed into a disk shape with a specific pressure, to obtain a positive pellet as a positive active material having a diameter of 15.5 mm and a thickness of 250 µm.

Using such a positive pellet, a coin cell having an outer size of 20 mm and a height of 1.6 mm was produced in the same manner as that in each of the previous embodiments.

### (Comparative Example 3-2)

A coin cell having the same size as that of the coin cell in Comparative Example 3-1 was produced in the same manner as that in Comparative Example 3-1, except that the β-type nickel oxyhydroxide having the approximately spherical particle 8 was used in place of the β-type nickel oxyhydroxide having the rock-like (non-spherical) particle shape 9 used in Comparative Example 3-1.

A filled amount of the positive mix in each of Comparative Examples 3-1 and 3-2 is shown in Table 5.

**Table 5**

| | Positive Electrode Material | Filled Amount of Positive Mix (g/cell) |
|---|---|---|
| Comparative Example 3-1 | Rock-like β-type Nickel Oxyhydroxide | 0.07 |
| Comparative Example 3-2 | Approximately Spherical β-type Nickel Oxyhydroxide | 0.1 |

In the case of filling a space with the positive mix, each of the tap density and bulk density of the β-type nickel oxyhydroxide having the approximately spherical particle shape 8 is higher than that of the β-type nickel oxyhydroxide having the rock-like (non-spherical) particle shape 9. Accordingly, the filled amount of the β-type nickel oxyhydroxide having the approximately spherical particle shape 8 in a specific volume becomes larger than that of the β-type nickel oxyhydroxide having the rock-like (non-spherical) particle shape 9. As a result, the content of the positive active material can be increased.

The coin cell 1 produced in each of Comparative Examples 3-1 and 3-2 has a feature that an open-circuit voltage in a state immediately after production is about 3.5 V, and the voltage is rapidly reduced by discharge, and is nearly kept at an even potential ranging from about 1.0 to 1.2 V.

Accordingly, the discharge test of the coin cell 1 for examining discharge characteristics is made in a state excluding the initial discharge portion by preliminary discharge. The preliminary discharge is performed at a constant current of 1 mA until the cell voltage becomes 1.3 V, and is left for one day.

After the preliminary discharge, a discharge test is made by performing discharge at each of constant currents of 1 mA and 5 mA until the cell voltage becomes 0.5 V. The discharge capacity of each of the coin cells in Comparative Examples 3-1 and 3-2 in each discharge test is shown in Table 6.

**Table 6**

| | Discharge Capacity (mAh) | |
|---|---|---|
| | Discharge at 1 mA | Discharge at 5 mA |
| Comparative Example 3-1 | 29.4 | 10.4 |
| Comparative Example 3-2 | 42.0 | 16.1 |

As is apparent from Table 6, in each case of discharge at 1 mA and discharge at 5 mA, the discharge capacity of the coin cell in Comparative Example 3-2 using the β-type nickel oxyhydroxide having the approximately spherical particle shape 8 as the positive active material is larger than the discharge capacity of the coin cell in Comparative Example 3-1 using the β-type nickel oxyhydroxide having the rock-like (non-spherical) particle shape 9 as the positive active material.

The reason for this may be due to the fact that the filled amount of the positive mix containing the β-type nickel oxyhydroxide having the approximately spherical particle shape 8 in a specific volume with a specific pressure is larger than the filled amount of the positive mix containing the β-type nickel oxyhydroxide having the rock-like (non-spherical) particle shape 9 in the same specific volume with the same specific pressure. This shows that in the case of using the β-type nickel oxyhydroxide for a non-aqueous primary cell, it is desirable to use the β-type nickel oxyhydroxide having the approximately spherical particle shape 8.

Hereinafter, coin cells in examples according to this embodiment, in each of which the β-type nickel oxyhydroxide having the approximately spherical particle shape 8 is used for the reason described above and a variable amount of each of cobalt, copper, and neodymium is dissolved as a solid-solution in the β-type nickel oxyhydroxide, will be described in comparison with coin cells in comparative examples.

### (Examples 3-1 to 3-14)

In these examples, the β-type nickel oxyhydroxide having the approximately spherical particle shape 8 is used as the positive active material, and cobalt (Co) is dissolved as a solid-solution in the β-type nickel oxyhydroxide having the approximately spherical particle shape 8. The content of cobalt is varied in a range of 0.5 to 16.0 wt%.

Each coin cell 1 was produced in the same manner as that described in the previous embodiment, for example, in terms of production of a positive mix, molding of a positive pellet 4, production of a negative active material 5, and interposition of a separator 6, except for the use of the β-type nickel oxyhydroxide having the approximately spherical particle shape 8 in which a variable amount of cobalt was dissolved as a solid-solution.

To produce the β-type nickel oxyhydroxide in which cobalt is dissolved as a solid-solution, nickel hydroxide in which cobalt is dissolved as a solid-solution is first produced by mixing a water-solution containing nickel sulfate and cobalt sulfate as a metal compound at a specific ratio, an ammonium compound such as ammonium sulfate, and an alkali water-solution such as sodium hydroxide, and stirring the mixture.

The β-type nickel oxyhydroxide having the approximately spherical particle shape in which cobalt is dissolved as a solid-solution is produced by putting the above-described nickel hydroxide in a mixed solution of an alkali water-solution such as sodium hydroxide and an oxidizer such as sodium hypochlorite, thereby chemically oxidizing the nickel hydroxide in the mixed solution.

Since the β-type nickel oxyhydroxide in which cobalt is dissolved as a solid-solution can be thus produced by dissolving cobalt as a solid-solution in the β-type nickel oxyhydroxide, the method of producing the β-type nickel oxyhydroxide in which cobalt is dissolved as a solid-solution is not limited to that described above but may be any other method capable of producing the β-type nickel oxyhydroxide in which cobalt is dissolved as a solid-solution.

The solid-solution amount of cobalt was determined by quantitatively measuring all of the metal elements by a chelatometric titration and then quantitatively measuring trace elements other than nickel by ICP (Inductively Coupled Plasma Emission Spectroscopy).

### (Comparative Examples 3-3 and 3-4)

Each coin cell 1 was produced in the same manner as that in Examples 3-1 to 3-14 except that the solid-solution amount of cobalt in Examples 3-1 to 3-14 was changed to a value in a range of 0.5 wt% or less, specifically, in a range of 0.3 to 0.4 wt%.

### (Comparative Examples 3-5 to 3-7)

Each coin cell 1 was produced in the same manner as that in Examples 3-1 to 3-14 except that the solid-solution amount of cobalt in Examples 3-1 to 3-14 was changed to a value in a range of 16 wt% or more, specifically, in a range of 16.1 to 17.0 wt%.

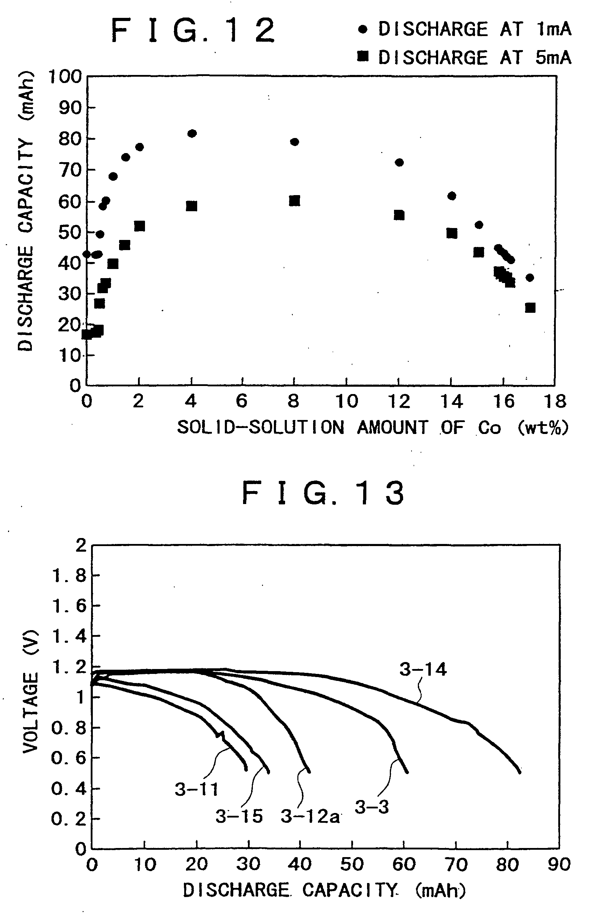

The discharge test was performed for each of the coin cells in Comparative Example 3-2 using the β-type nickel oxyhydroxide having the approximately spherical particle 8 containing no cobalt dissolved as a solid-solution and Example 3-1 to 3-14 and Comparative Examples 3-3 to 3-7 using the β-type nickel oxyhydroxide having the approximately spherical particle 8 containing a specific amount of cobalt dissolved as a solid-solution. In this test, the discharge capacity upon discharge at 1 mA or 5 mA was measured. The result is shown in Table 7. A change in discharge capacity depending on the solid-solution amount of cobalt (Co) was also measured. The result is shown in FIG. 12.

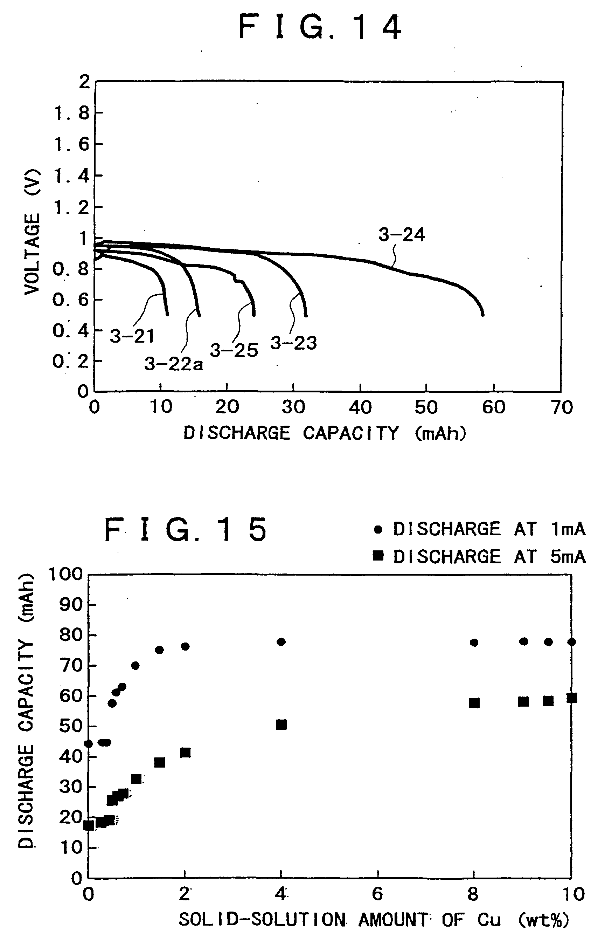

For each of the coin cells in Comparative Examples 3-1, 3-2, and 3-7 and Examples 3-3 and 3-7 as typical examples, a change in discharge capacity upon discharge at a constant current of 1 mA is shown in FIG. 13, and a change in discharge capacity upon discharge at a constant current of 5 mA is shown in FIG. 14. In these figures', the changes in discharge capacity in Comparative Example 3-1 are shown by curves 3-11 and 3-21, the changes in discharge capacity in Comparative Example 3-2 are shown by curves 3-12a and 3-22a, and the changes in discharge capacity in Comparative Example 3-7 are shown by curves 3-15 and 3-25; and the changes in discharge capacity in Example 3-3 are shown by curves 3-13 and 3-23, and the changes in discharge capacity in Example 3-7 are shown by curves 3-14 and 3-24.

**Table 7**

| | Solid-Solution Amount of Cobalt (wt%) | Filled Amount of Positive Mix (g/cell) | Discharge Capacity (mAh) | |
|---|---|---|---|---|
| | | | Discharge at 1 mA | Discharge at 5 mA |
| Comparative Example 3-2 | 0.0 | 0.1 | 42.0 | 16.1 |
| Comparative Example 3-3 | 0.3 | 0.1 | 42.0 | 16.9 |
| Comparative Example 3-4 | 0.4 | 0.1 | 42.3 | 17.5 |
| Example 3-1 | 0.5 | 0.1 | 48.7 | 25.6 |
| Example 3-2 | 0.6 | 0.1 | 59.4 | 30.4 |
| Example 3-3 | 0.7 | 0.1 | 60.9 | 32.1 |
| Example 3-4 | 1.0 | 0.1 | 68.7 | 38.4 |
| Example 3-5 | 1.5 | 0.1 | 75.2 | 45.0 |
| Example 3-6 | 2.0 | 0.1 | 78.3 | 50.8 |
| Example 3-7 | 4.0 | 0.1 | 82.6 | 58.5 |
| Example 3-8 | 8.0 | 0.1 | 80.5 | 60.4 |
| Example 3-9 | 12.0 | 0.1 | 74.6 | 55.8 |
| Example 3-10 | 14.0 | 0.1 | 62.4 | 49.1 |
| Example 3-11 | 15.0 | 0.1 | 52.0 | 42.1 |
| Example 3-12 | 15.8 | 0.1 | 46.7 | 37.5 |
| Example 3-13 | 15.9 | 0.1 | 44.5 | 36.2 |
| Example 3-14 | 16.0 | 0.1 | 43.1 | 34.7 |
| Comparative Example 3-5 | 16.1 | 0.1 | 42.0 | 34.5 |
| Comparative Example 3-6 | 16.2 | 0.1 | 41.5 | 33.9 |
| Comparative Example 3-7 | 17.0 | 0.1 | 34.1 | 24.0 |

As is apparent from Table 7 and FIGS. 13 and 14, the discharge capacity can be improved by dissolving a specific amount of cobalt as a solid-solution in the β-type nickel oxyhydroxide as the positive active material, and particularly, the improvement effect in each of the coin cells in Examples 3-1 to 3-14 (solid-solution amount of cobalt: 0.5 to 16.0 wt%) is larger than that in each of the coin cells in Comparative Examples 3-3 and 3-4 (solid-solution amount of cobalt: 0.3 to 0.4 wt%) and Comparative Examples 3-5 to 3-7 (solid-solution amount of cobalt: 16.1 to 17.0 wt%).

In this way, it is apparent that if the solid-solution amount of cobalt is less than 0.5 wt%, the effect of improving the discharge capacity is insufficient, whereas if the solid-solution amount of cobalt is equal to or more than 0.5 wt%, the effect of improving the discharge capacity can be sufficiently obtained; however, if the solid-solution amount of cobalt is more than 16.0 wt%, the effect of improving the discharge capacity is sequentially attenuated.'

The mechanism for improving the discharge capacity by adding cobalt is not sufficiently clarified but may be considered as follows. Namely, in the case of dissolving cobalt as a solid-solution in the nickel oxyhydroxide, a nickel site is replaced by cobalt, and at this time, cobalt oxyhydroxide (CoOOH) is partially generated in the nickel oxyhydroxide. Since the cobalt oxyhydroxide is higher in conductivity than nickel oxyhydroxide, the conductivity of the positive active material is improved; however, since the cobalt oxyhydroxide does not contribute to the discharge capacity, the discharge capacity is reduced if the solid-solution of cobalt becomes too large.

In the case of the coin cell in Example 3-7, the discharge capacity upon discharge at a constant current of 1 mA is 82.6 mAh (Table 7), and as a result of calculation based on this discharge capacity value, the discharge capacity per filled amount (wt%) of the positive active material becomes about 1060 mAh/g (= 82.6/0.1/0.78). It is apparent to those skilled in the art that such a value is much larger than that obtained by a cell using a conventional positive material.

Accordingly, the discharge capacity of the cell specified such that the solid-solution amount of cobalt in the positive active material is in a range of 0.5 to 16.0 wt% on the basis of the amount of the β-type nickel oxyhydroxide can be significantly improved as compared with the discharge capacity of a cell with no cobalt dissolved as a solid-solution, for example, the cell in Comparative Example 3-2 and the discharge capacity of a cell with 16.0 wt% or more of cobalt dissolved as a solid-solution, for example, the cell in Comparative Example 3-7, and particularly, such a discharge capacity can be made very large as compared.with that obtained by a cell using a conventional positive material. As a result, it is advantageous to specify the solid-solution amount of cobalt to a value in a range of 0.5 to 16.0 wt%.

### [Third Embodiment (2)]

### (Examples 3-15 to 3-25)

In these examples, the β-type nickel oxyhydroxide having the approximately spherical particle shape 8 is used as the positive active material, and copper (Cu) as a metal compound is dissolved as a solid-solution in the β-type nickel oxyhydroxide having the approximately spherical particle shape 8. The content of copper is varied in a range of 0.5 to 10.0 wt%. Each coin cell 1 was produced in the same manner as that described in the previous embodiment, for example, in terms of production of a positive mix, molding of a positive pellet 4, production of a negative active material 5, and interposition of a separator 6, except for the use of the β-type nickel oxyhydroxide having the approximately spherical particle shape 8 in which a variable amount of copper was dissolved as a solid-solution.

To produce the β-type nickel oxyhydroxide in which copper is dissolved as a solid-solution, nickel hydroxide in which copper is dissolved as a solid-solution is first produced by mixing a water-solution containing nickel sulfate and copper sulfate at a specific ratio, an ammonium compound such as ammonium sulfate, and an alkali water-solution such as sodium hydroxide, and stirring the mixture.

The β-type nickel oxyhydroxide having the approximately spherical particle shape in which copper is dissolved as a solid-solution is produced by putting the above-described nickel hydroxide containing copper in a mixed solution of an alkali water-solution such as sodium hydroxide and an oxidizer such as sodium hypochlorite, thereby chemically oxidizing the nickel hydroxide in the mixed solution. Even in this case, the method of producing the β-type nickel oxyhydroxide in which copper is dissolved as a solid-solution is not limited to that described above but may be any other method capable of producing the β-type nickel oxyhydroxide in which copper is dissolved as a solid-solution.

The solid-solution amount of copper was determined by quantitatively measuring all of the metal elements by a chelatometric titration and then quantitatively measuring trace elements other than nickel by ICP (Inductively Coupled Plasma Emission Spectroscopy).

### (Comparative Examples 3-8 and 3-9)

Each coin cell 1 was produced in the same manner as that in Examples 3-15 to 3-25 except that the solid-solution amount of copper in Examples 3-15 to 3-25 was changed to a value in a range of 0.5 wt% or less, specifically, in a range of 0.3 to 0.4 wt%.

The discharge test was performed for each of the coin cells in Comparative Example 3-2 using the β-type nickel oxyhydroxide having the approximately spherical particle 8 containing no copper dissolved as a solid-solution and Examples 3-15 to 3-25 and Comparative Examples 3-8 and 3-9 using the β-type nickel oxyhydroxide having the approximately spherical particle 8 containing a specific amount of copper dissolved as a solid-solution. In this test, the discharge capacity upon discharge at 1 mA or 5 mA was measured. The result is shown in Table 8. A change in discharge capacity depending on the solid-solution amount of copper (Cu) was also measured. The result is shown in FIG. 15.

**Table 8**

| | Solid-Solution Amount of Copper (wt%) | Filled Amount of Positive Mix (g/cell) | Discharge Capacity (mAh) | |
|---|---|---|---|---|
| | | | Discharge at 1 mA | Discharge at 5 mA |
| Comparative Example 3-2 | 0.0 | 0.1 | 42.0 | 16.1 |
| Comparative Example 3-8 | 0.3 | 0.1 | 42.1 | 17.2 |
| Comparative Example 3-9 | 0.4 | 0.1 | 42.1 | 17.6 |
| Example 3-15 | 0.5 | 0.1 | 55.5 | 23.1 |
| Example 3-16 | 0.6 | 0.1 | 58.9 | 24.5 |
| Example 3-17 | 0.7 | 0.1 | 61.2 | 25.3 |
| Example 3-18 | 1.0 | 0.1 | 68.3 | 30.5 |
| Example 3-19 | 1.5 | 0.1 | 73.1 | 35.1 |
| Example 3-20 | 2.0 | 0.1 | 73.9 | 38.9 |
| Example 3-21 | 4.0 | 0.1 | 75.8 | 48.3 |
| Example 3-22 | 8.0 | 0.1 | 76.0 | 55.3 |
| Example 3-23 | 9.0 | 0.1 | 76.1 | 56.1 |
| Example 3-24 | 9.5 | 0.1 | 76.1 | 56.1 |
| Example 3-25 | 10.0 | 0.1 | 76.2 | 57.2 |

As is apparent from Table 8 and FIG. 15, the discharge capacity can be improved by dissolving a specific amount of copper as a solid-solution in the β-type nickel oxyhydroxide as the positive active material, and particularly, the improvement effect in each of the coin cells in Examples 3-15 to 3-25 (solid-solution amount of copper: 0.5 to 10.0 wt%) is larger than that in each of the coin cells in Comparative Examples 3-8 and 3-9 (solid-solution amount of copper: 0.3 to 0.4 wt%).

In this way, it is apparent that if the solid-solution amount of copper is less than 0.5 wt%, the effect of improving the discharge capacity is insufficient, whereas if the solid-solution amount of copper is equal to or more than 0.5 wt%, the effect of improving the discharge capacity can be sufficiently obtained.

The mechanism for improving the discharge capacity by adding copper is not sufficiently clarified but may be considered as follows: namely, in the case of dissolving copper as a solid-solution in the nickel oxyhydroxide, a nickel site is replaced by copper, and at this time, since the ion radius of copper is larger than that of nickel, crystal of the nickel oxyhydroxide is strained by solid-solution of copper, to thereby improve the reactivity with lithium as the negative active material.

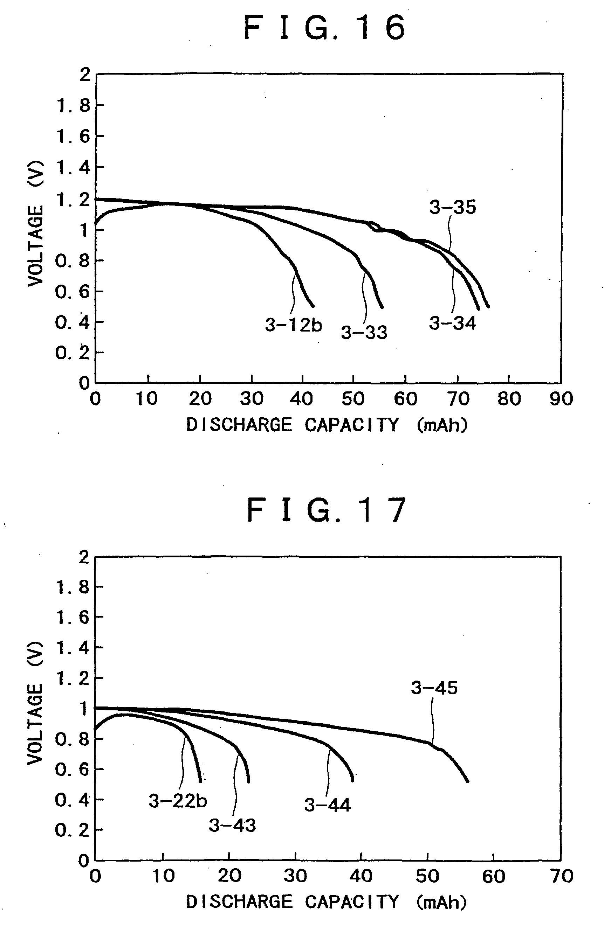

For each of the coin cells in Examples 3-15, 3-20, 3-23 and Comparative Example 3-2 as typical examples using the β-type nickel oxyhydroxide having the approximately spherical particle 8, a change in discharge capacity depending on the solid-solution amount of copper upon discharge at a constant current of 1 mA is shown in FIG. 16, and a change in discharge capacity depending on the solid-solution amount of copper upon discharge at a constant current of 5 mA is shown in FIG. 17.

As is apparent from FIGS. 16 and 17, in each case of discharge at 1 mA and 5 mA, as compared with the discharge characteristic shown in a curve 3-12b or 3-22b (Comparative Example 3-2, with no copper dissolved), the discharge characteristics shown in a curve 3-33 or 3-43 (Example 3-15, with copper dissolved), a curve 3-34 or 3-44 (Example 3-20, with copper dissolved), and a curve 3-35 or 3-45 (Example 3-23, with copper dissolved) become larger in discharge capacity in this order. From this comparison, it is also apparent that the discharge capacity is improved with an increase in solid-solution amount of copper.

The increased solid-solution amount of copper improves the discharge capacity; however, from the viewpoint of the present technical level, the 'solid-solution amount of copper is limited to 10.0 wt% at maximum because the ion radius of copper is larger than that of nickel as described above. In other words, if the solid-solution amount of copper in a range of 10.0 wt% or more becomes possible, the discharge capacity can be more increased. According to the present invention, from this viewpoint, the upper limit of the solid-solution amount of copper effective to improve the discharge capacity is not necessarily limited to 10.0 wt% but should be construed as limited to the possible maximum solid-solution amount of copper.

In the case of the coin cell in Example 3-25, the discharge capacity upon discharge at a constant current of 1 mA is 76.2 mAh (Table 8), and as a result of calculation based on this discharge capacity value, the discharge capacity per filled amount (wt%) of the positive active material becomes about 977 mAh/g (= 76.2/0.1/0.78). It is apparent to those skilled in the art that such a value is much larger than that obtained by a cell using a conventional positive material.

Accordingly, the discharge capacity of the cell specified such that the solid-solution amount of copper in the positive active material is in a range of 0.5 to 10.0 wt% on the basis of the amount of the β-type nickel oxyhydroxide can be significantly improved as compared with that of a cell with no copper dissolved as a solid-solution, for example, the cell in Comparative Example 3-2, and particularly, such a discharge capacity can be made very large as compared with that obtained by a cell using a conventional positive material. As a result, it is advantageous to specify the solid-solution amount of copper to a value in a range of 0.5 to 10.0 wt%.

### [Third Embodiment (3)]

### (Examples 3-26 to 3-31)

In these examples, the β-type nickel oxyhydroxide having the approximately spherical particle shape 8 is used as the positive active material, and neodymium (Nd) is dissolved as a solid-solution in the β-type nickel oxyhydroxide having the approximately spherical particle shape 8. The content of neodymium is varied in a range of 0.2 to 2.5 wt%. Each coin cell 1 was produced in the same manner as that described in the previous embodiment, for example, in terms of production of a positive mix, molding of a positive pellet 4, production of a negative active material 5, and interposition of a separator 6, except for the use of the β-type nickel oxyhydroxide having the approximately spherical particle shape 8 in which a variable amount of neodymium was dissolved as a solid-solution.

To produce the β-type nickel oxyhydroxide in which neodymium is dissolved as a solid-solution, nickel hydroxide in which neodymium is dissolved as a solid-solution is first produced by mixing a water-solution containing nickel sulfate and neodymium oxide at a specific ratio, an ammonium compound such as ammonium sulfate, and an alkali water-solution such as sodium hydroxide, and stirring the mixture.

The β-type nickel oxyhydroxide having the approximately spherical particle shape in which neodymium is dissolved as a solid-solution is produced by putting the above-described nickel hydroxide containing neodymium dissolved as a solid-solution therein in a mixed solution of an alkali water-solution such as sodium hydroxide and an oxidizer such as sodium hypochlorite, thereby chemically oxidizing the nickel hydroxide in the mixed solution. Even in this case, the method of producing the β-type nickel oxyhydroxide in which neodymium is dissolved as a solid-solution is not limited to that described above but may be any other method capable of producing the β-type nickel oxyhydroxide in which copper is dissolved as a solid-solution.

The solid-solution amount of neodymium was determined by quantitatively measuring all of the metal elements by a chelatometric titration and then quantitatively measuring trace elements other than nickel by ICP (Inductively Coupled Plasma Emission Spectroscopy).

### (Comparative Example 3-10)

A coin cell 1 was produced in the same manner as that in Examples 3-26 to 3-31 except that the solid-solution amount of neodymium in Examples 3-26 to 3-31 was changed to a value in a. range of less than 0.2 wt%, more specifically, to 0. 1 wt%.

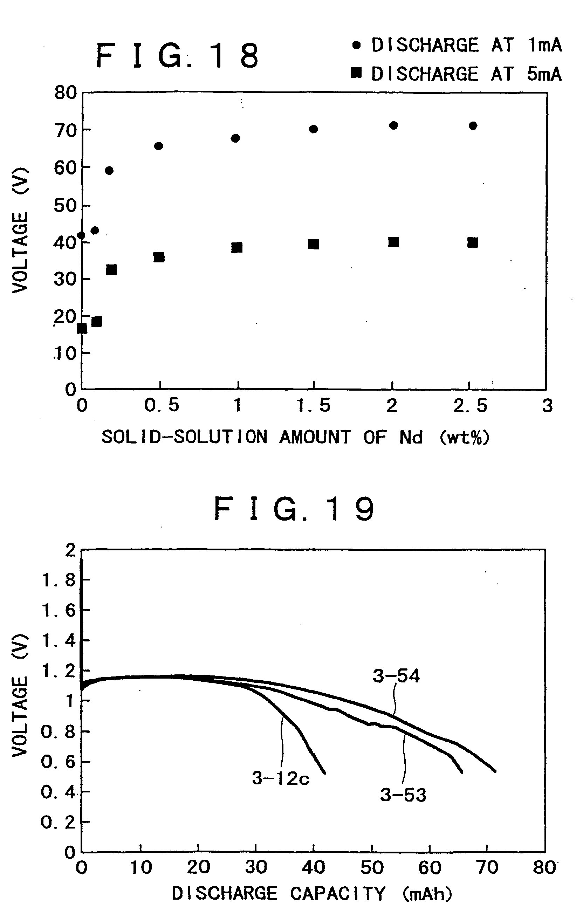

The discharge test was performed for each of the coin cells in Comparative Example 3-2 using the β-type nickel oxyhydroxide having the approximately spherical particle 8 containing no neodymium dissolved as a solid-solution and Examples 3-26 to 3-31 and Comparative Example 3-10 using the β-type nickel oxyhydroxide having the approximately spherical particle 8 containing a specific amount of neodymium dissolved as a solid-solution. In this test, the discharge capacity upon discharge at 1 mA or 5 mA was measured. The result is shown in Table 9. A change in discharge capacity depending on the solid-solution amount of neodymium (Nd) was also measured. The result is shown in FIG. 18.

**Table 9**

| | Solid-Solution Amount of Neodymium (wt%) | Filled Amount of Positive Mix (g/cell) | Discharge Capacity (mAh) | |
|---|---|---|---|---|
| | | | Discharge at 1 mA | Discharge at 5 mA |
| Comparative Example 3-2 | 0.0 | 0.1 | 42.0 | 16.1 |
| Comparative Example 3-10 | 0.1 | 0.1 | 43.7 | 17.6 |
| Example 3-26 | 0.2 | 0.1 | 58.9 | 32.9 |
| Example 3-27 | 0.5 | 0.1 | 65.3 | 35.8 |
| Example 3-28 | 1.0 | 0.1 | 67.8 | 38.4 |
| Example 3-29 | 1.5 | 0.1 | 69.7 | 38.9 |
| Example 3-30 | 2.0 | 0.1 | 71.0 | 39.7 |
| Example 3-31 | 2.5 | 0.1 | 71.0 | 39.6 |

As is apparent from Table 9 and FIG. 18, the discharge capacity can be improved by dissolving a specific amount of neodymium as a solid-solution in the β-type nickel oxyhydroxide as the positive active material, and particularly, the improvement effect in each of the coin cells in Examples 3-26 to 3-31 (solid-solution amount of neodymium: 0.2 to 2.5 wt%) is larger than that in the coin cell in Comparative Example 3-10 (solid-solution amount of neodymium: 0.1 wt%).

In this way, it is apparent that if the solid-solution amount of neodymium is less than 0.2 wt%, the effect of improving the discharge capacity is insufficient, whereas if the solid-solution amount of neodymium is equal to or more than 0.2 wt%, the effect of improving the discharge capacity can be sufficiently obtained.

The mechanism for improving the discharge capacity by adding neodymium is not sufficiently clarified but may be considered as follows: namely, a nickel site is replaced by neodymium, and at this time, since the ion radius of neodymium is larger than that of nickel, crystal of the nickel oxyhydroxide is strained by solid-solution of neodymium, to thereby improve the reactivity with lithium as the negative active material.

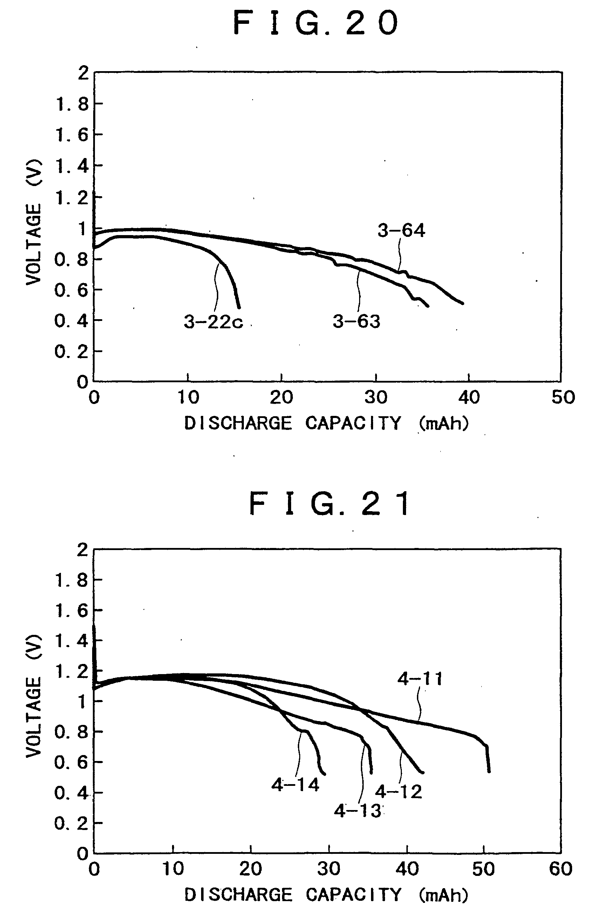

For each of the coin cells in Examples 3-27 and 3-30 and Comparative Example 3-2 using the β-type nickel oxyhydroxide having the approximately spherical particle 8, a change in discharge capacity depending on the solid-solution amount of neodymium upon discharge at a constant current of 1 mA is shown in FIG. 19, and a change in discharge capacity depending on the solid-solution amount of copper upon discharge at a constant current of 5 mA is shown in FIG. 20.

As is apparent from FIGS. 19 and 20, in each case of discharge at 1 mA and 5 mA, as compared with the discharge characteristic shown in a curve 3-12c or 3-22c (Comparative Example 3-2, with no neodymium dissolved), the discharge characteristics shown in a curve 3-53 or 3-63 (Example 3-27, with neodymium dissolved), a curve 3-54 or 3-64 (Example 3-30, with neodymium dissolved) become larger in discharge capacity in this order. From this comparison, it is also apparent that the discharge capacity is improved with an increase in solid-solution amount of neodymium.

The increased solid-solution amount of neodymium improves the discharge capacity; however, from the viewpoint of the present technical level, the solid-solution amount of neodymium is limited to 2.5 wt% at maximum because the ion radius of neodymium is larger than that of nickel as described above. In other words, if the solid-solution amount of neodymium in a range of 2.5 wt% or more becomes possible, the discharge capacity can be more increased. According to the present invention, from this viewpoint, the upper limit of the solid-solution amount of neodymium effective to improve the discharge capacity is not necessarily limited to 2.5 wt% but should be construed as limited to the possible maximum solid-solution amount of neodymium.

In the case of the coin cell in Example 3-30, the discharge capacity upon discharge at a constant current of 1 mA is 71.0 mAh (Table 9), and as a result of calculation based on this discharge capacity value, the discharge capacity per filled amount (wt%) of the positive active material becomes about 910 mAh/g (= 71.0/0.1/0.78). It is apparent to those skilled in the art that such a value is much larger than that obtained by a cell using a conventional positive material.

Accordingly, the discharge capacity of the cell specified such that the solid-solution amount of neodymium in the positive active material is in a range of 0.2 to 2.5 wt% on the basis of the amount of the β-type nickel oxyhydroxide can be significantly improved as compared with that of a cell with no neodymium dissolved as a.solid-solution, for example, the cell in Comparative Example 3-2, and particularly, such a discharge capacity can be made very large as compared with that obtained by a cell using a conventional positive material. As a result, it is advantageous to specify the solid-solution amount of neodymium to a value in a range of 0.2 to 2.5 wt%.

### [Fourth Embodiment]

In this embodiment, γ-type nickel oxyhydroxide is used. The γ-type nickel oxyhydroxide is produced by an electrolytic oxidation process or a chemical oxidation process. One example of the electrolytic oxidation process involves charging nickel hydroxide taken as a positive electrode in a water-solution of sulfuric acid or nitric acid.

One example of the chemical oxidation process for producing the γ-type nickel oxyhydroxide involves oxidizing nickel hydroxide in an alkali-solution containing sodium hypochlorite.

This embodiment will be hereinafter described in detail by way of the following examples and comparative examples.

### (Example 4-1)

A mixture of 78 wt% of the γ-type nickel. oxyhydroxide having the approximately spherical particle shape 8, 20 wt% of graphite as a conductive agent, and 2 wt% of polyvinylidene fluoride (PVdF) as a binder was dispersed in N-methyl-2-pyrrolidone (NMP), to obtain'a positive mix slurry.

The positive mix slurry was dried' at 120°C for 2 hours, to evaporate NMP, and the resultant aggregated positive mix was pulverized in a mortar into a powdery positive mix. The powdery positive mix was supported by a metal mesh made from aluminum and was pressed into a disk shape with a specific pressure, to obtain a positive pellet 4 as a positive active material having a diameter of 15.5 mm and a thickness of 250 µm.

The positive pellet 4 was disposed in a positive can 2 made from stainless steel, and a separator 6 composed of a fine porous film made from polyethylene and having a thickness of 25 µm was placed on the positive pellet 4. A non-aqueous electrolyte was prepared by adding lithium hexafluorophosphate in a mixed solvent of propylene carbonate and dimethyl carbonate at a volume ratio of 1 : 1. The concentration of the lithium hexafluorophosphate was set to 1 mol/L. A specific amount of the non-aqueous electrolyte was injected in the positive can 2.

A lithium metal was molded into a disk shape having a diameter of 15.5 mm and a thickness of 800 µm, to form a negative active material 5. The negative active material 5 was placed on the separator 6. A sealing gasket 7 was mounted on a peripheral edge portion of a negative cap 3 made from stainless steel.

The negative cap 3 provided with the sealing gasket 7 was stacked on the positive can 2 containing the positive pellet 4, separator 6, negative active material 5, and the specific amount of the non-aqueous electrolyte, and was fitted in and crimped to the positive can 2, to produce a coin cell 1 having an outer size of 20 mm and a height of 1.6 mm.

### (Comparative Example 4-1)

A coin cell 1 was produced in the same manner as that in Example 4-1 except that the β-type nickel oxyhydroxide having the approximately spherical particle shape 8 was used in place of the γ-type nickel oxyhydroxide having the approximately spherical particle shape 8 used in Example 4-1.

### (Comparative Example 4-2)

A coin cell 1 was produced in the same manner as that in Example 4-1 except that the γ-type nickel oxyhydroxide having the rock-like (non-spherical) particle shape 9 was used in place of the γ-type nickel oxyhydroxide having the approximately spherical particle shape 8 used in Example 4-1.

### (Comparative Example 4-3)

A coin cell 1 was produced in the same manner as that in Example 4-1 except that the β-type nickel oxyhydroxide having the same rock-like (non-spherical) particle shape 9 as that in Comparative Example 4-2 was used in place of the γ-type nickel oxyhydroxide having the approximately spherical particle shape 8 used in Example 4-1.

The filled amounts of the positive mixes in Example 4-1 and Comparative Examples 4-1 to 4-3 are shown in Table 10.

**Table 10**

| | Positive Electrode Material | Filled Amount of Positive Mix (g/cell) |
|---|---|---|
| Example 4-1 | Approximately Spherical γ-type Nickel Oxyhydroxide | 0.09 |
| Comparative Example 4-1 | Approximately Spherical β-type Nickel Oxyhydroxide | 0.10 |
| Comparative Example 4-2 | Rock-like γ-type Nickel Oxyhydroxide | 0.07 |
| Comparative Example 4-3 | Rock-like β-type Nickel Oxyhydroxide | 0.07 |

In the case of filling a space with the positive mix, each of the tap density and bulk density of the nickel oxyhydroxide having the approximately spherical particle shape 8 is higher than that of the nickel oxyhydroxide having the rock-like (non-spherical) particle shape 9. Accordingly, the filled amount of the nickel oxyhydroxide having the approximately spherical particle shape 8 in a specific volume becomes larger than that of the nickel oxyhydroxide having the rock-like (non-spherical) particle shape 9. As a result, the content of the positive active material can be increased.

By the way, nickel oxyhydroxide includes β-type nickel oxyhydroxide (β-NiOOH) having a theoretical density of 4.68 g/cm³ and γ-type nickel oxyhydroxide (γ-NiOOH) having a theoretical density of 3.79 g/cm³.

In general, the discharge capacity of a cell depends on the filled amount of an active material used for the cell, and the filled amount of the active material becomes large with increasing density of the active material. On the basis of such a relationship, it may be estimated that the β-type nickel oxyhydroxide having a higher density be superior to the γ-type nickel oxyhydroxide having a lower density; however, in actual, the discharge capacity of a cell using the γ-type nickel oxyhydroxide may sometimes become higher than that of a cell using the β-type nickel oxyhydroxide as will be described later.

The nickel oxyhydroxide is a layered compound, and the interlayer distance of the β-type nickel oxyhydroxide is in a range of 4.6 to 4.8 Å and the interlayer distance of the γ-type nickel oxyhydroxide is in a range of 7 to 8 Å. Accordingly, the interlayer distance of the γ-type nickel oxyhydroxide is larger than that of the β-type nickel oxyhydroxide.

This may be considered, while not on the basis of the clarified mechanism, as the reason why a positive active material using the γ-type nickel oxyhydroxide is higher than that using the β-type nickel oxyhydroxide in terms of the reactivity with lithium as a negative active material and hence to realize a higher capacity of a cell although the filled amount of the γ-type nickel oxyhydroxide is substantially smaller than that of the β-type nickel oxyhydroxide.

Accordingly, to obtain a higher capacity of a cell, it is desirable to use the γ-type nickel oxyhydroxide of a low density type having a particle distribution of 5 to 70 µm and an average particle size of 15 to 25 µm.

The coin cell 1 produced in each of Example 4-1 and Comparative Examples 4-1 to 4-3 has a feature that an open-circuit voltage in a state immediately after production is about 3.5 V, and the voltage is rapidly reduced by discharge, and is nearly kept at an even potential ranging from about 1.0 to 1.2 V.

Accordingly, the discharge test of the coin cell 1 for examining discharge characteristics is made in a state excluding the initial discharge portion by preliminary discharge. The preliminary discharge is performed at a constant current of 1 mA until the cell voltage becomes 1.3 V, and is left for one day.

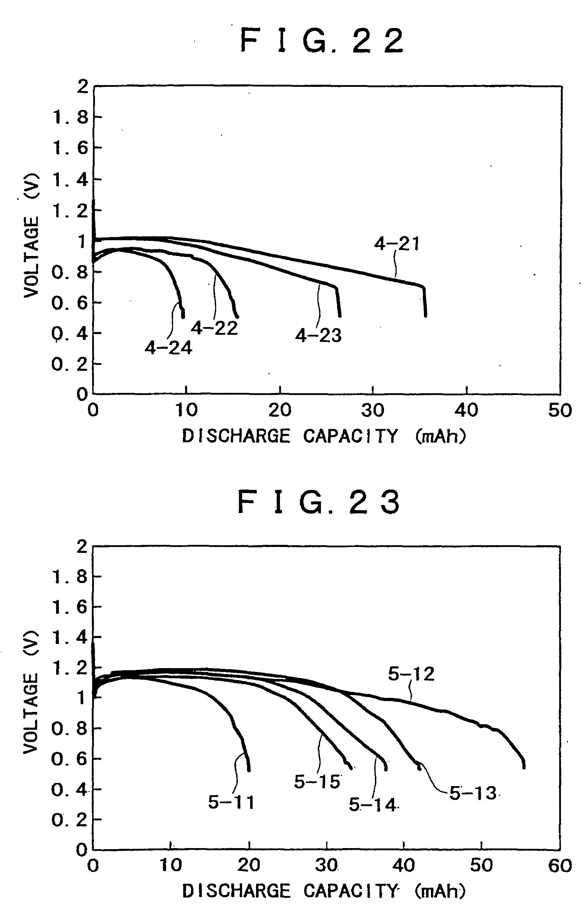

After the preliminary discharge, a discharge test is made by performing discharge at a constant current of 1 mA until the cell voltage becomes 0.5 V. A change in discharge capacity of the coin cell 1 in each of Example 4-1 and Comparative Examples 4-1 to 4-3 in such a discharge test performed at a constant current of 1 mA was measured. The result is shown in FIG. 21. A change in discharge capacity of the coin cell 1 in each of Example 4-1 and Comparative Examples 4-1 to 4-3 in the discharge test performed at a constant current of 5 mA was also measured. The result is shown in FIG. 22. The discharge capacity in each discharge test is shown in Table 11. In FIGS. 21 and 22, curves 4-11 and 4-21 each show the change in discharge capacity in Example 4-1; curves 4-12 and 4-22 each show the change in discharge capacity in Comparative Example 4-1; curves 4-13 and 4-23 each show the change in discharge capacity in Comparative Example 4-2; and curves 4-14 and 4-24 each show the change in discharge capacity in Comparative Example 4-3.

**Table 11**

| | Discharge Capacity (mAh) | |
|---|---|---|
| | Discharge at 1 mA | Discharge at 5 mA |
| Example 4-1 | 50.4 | 36.0 |
| Comparative Example 4-1 | 42.0 | 16.1 |
| Comparative Example 4-2 | 35.2 | 26.8 |
| Comparative Example 4-3 | 29.4 | 10.4 |

As is apparent from FIGS. 21 and 22, in each case of discharge at 1m A and discharge at 5 mA, the discharge characteristic, shown by the curve 4-11 or 4-21, of the coin cell 1 in Example 4-1 using the γ-type nickel oxyhydroxide having the approximately spherical particle shape 8 as the positive active material is larger in discharge capacity than each of the discharge characteristic, shown by the curve 4-12 or 4-22, of the coin cell 1 in Comparative Example 4-1 using the β-type nickel oxyhydroxide having the approximately spherical particle shape 8, the discharge characteristic, shown by the curve 4-13 or 4-23, of the coin cell 1 in Comparative Example 4-2 using the γ-type nickel oxyhydroxide having the rock-like (non-spherical) particle shape 9, and the discharge characteristic, shown by the curve 4-14 or 4-24, of the coin cell 1 in Comparative Example 4-3 using the β-type nickel oxyhydroxide having the rock-like (non-spherical) particle shape 9.

As is also apparent from Table 11, in each case of discharge at 1 mA and discharge at 5 mA, the discharge capacity of the coin cell 1 in each of Example 4-1 and Comparative Example 4-1 using the γ-type and β-type nickel oxyhydroxides having the approximately spherical particle shape 8 as the positive active materials respectively is larger than the discharge capacity of the coin cell 1 in each of Comparative Examples 4-2 and 4-3 using the γ-type and β-type nickel oxyhydroxides having the rock-like (non-spherical) particle shape 9 as the positive active materials respectively.

It is also apparent that the discharge capacity of the cell using the γ-type nickel oxyhydroxide is larger than that of the cell using the β-type nickel oxyhydroxide. As a result, it becomes apparent that the discharge capacity of the cell in Example 4-1 using the γ-type nickel oxyhydroxide having the approximately spherical particle shape 8 is larger than the cell in each of Comparative Examples 4-1 to 4-3.

Accordingly, it is desirable to use the γ-type nickel oxyhydroxide having the approximately spherical particle shape 8 for a positive active material.

As is apparent from Table 11, the discharge capacity of the cell in Example 4-1 upon discharge at a constant current of 1 mA is 50.4 mAh, and as a result of calculation based on this discharge capacity value, the discharge capacity per filled amount (wt%) of the positive active material becomes about 718 mAh/g (= 50.4/0.09/0.78). It is apparent to those skilled in the art that such a value is much larger than that obtained by a cell using a conventional positive material.

### [Fifth Embodiment]

In this embodiment, nickel oxyhydroxide as a main component of a positive active material is not particularly limited. To be more specific, from the viewpoint of the chemical structure, either β-type nickel oxyhydroxide (β-NiOOH) or γ-type nickel oxyhydroxide (γ-NiOOH) may be used, and from the viewpoint of the shape, either nickel oxyhydroxide having an approximately spherical particle shape or nickel oxyhydroxide having a rock-like particle shape may be used. Alternatively, nickel oxyhydroxide in which an element such as zinc or yttrium is dissolved as a solid-solution may be used.

A conductive agent as one component of a positive active material is not particularly limited but may be generally selected from artificial graphite in the form of fine particles, expanded particles, or thinned particles, and natural graphite in the form of scale-like particles or flake particles. The conductive agent is contained in an amount of 5 to 30 wt% on the basis of the total weight of a positive mix.

A binder as one component of a positive active material is at least one kind selected from fluorocarbon resins such as polytetrafluoroethylene and vinylidene fluoride and butadiene-styrene resins. The binder is contained in an amount of 1 to 10 wt% on the basis of the total weight of a positive mix.

A coin cell 1 using the β-type nickel oxyhydroxide as a positive active material is produced by disposing a positive pellet 4 in a positive can 2, placing a separator 6 on the positive pellet 4, injecting a specific amount of a non-aqueous electrolyte (electrolytic solution) in the positive can 2, disposing a negative material 5 on the separator 6, mounting a sealing gasket 7 on a peripheral edge portion of a negative cap 3, fitting the negative cap 3 in the positive can 2 via the sealing gasket 7, and sealingly crimping the negative cap 3 to the positive can 2 in such a state. The coin cell 1 as a non-aqueous primary cell is thus obtained.

The nickel oxyhydroxide is produced by an electrolytic oxidation process or a chemical oxidation process. One example of the electrolytic oxidation process involves charging nickel hydroxide taken as a positive electrode in a water-solution of sulfuric acid or nitric acid.

One example of the chemical oxidation process for producing the nickel oxyhydroxide involves oxidizing nickel hydroxide in an alkali-solution containing sodium hypochlorite.

This embodiment will be hereinafter described in detail by way of the following examples and comparative examples.

### (Examples 5-1 to 5-8)

A mixture of the β-type nickel oxyhydroxide (β-NiOOH) having the approximately spherical particle shape 8 as a positive active material, a graphite powder (high purity graphite powder available from Nippon Graphite Industries, Ltd. under the trade name of "SP-20") as a conductive agent, and polyvinylidene fluoride (PVdF) as a binder was dispersed in N-methyl-2-pyrrolidone (NMP), to obtain a positive mix slurry.

The content of the polyvinylidene fluoride (PVdF) as the binder was set to 2 wt% on the basis of the total amount of the positive mix, and the content of the graphite powder as the conductive agent was changed in a range of 5 to 30 wt%.

The positive mix slurry was dried at 120°C for 2 hours, to evaporate NMP, and the resultant aggregated positive mix was pulverized in a mortar into a powdery positive mix. The powdery positive mix was supported by a metal mesh made from aluminum and was pressed into a disk shape with a specific pressure, to obtain a positive pellet 4 as a positive active material having a diameter of 15.5 mm and a thickness of 250 µm.

The positive pellet 4 was disposed in a positive can 2 made from stainless steel, and a separator 6 composed of a fine porous film made from polyethylene and having a thickness of 25 µm was placed on the positive pellet 4. A non-aqueous electrolyte (electrolytic solution) was prepared by adding lithium hexafluorophosphate in a mixed solvent of propylene carbonate and dimethyl carbonate at a volume ratio of 1 : 1. The concentration of the lithium hexafluorophosphate was set to 1 mol/L. A specific amount of the non-aqueous electrolyte was injected in the positive can 2.

A lithium metal was molded into a disk shape having a diameter of 15.5 mm and a thickness of 800 µm, to form a negative active material 5. The negative active material 5 was placed on the separator 6. A sealing gasket 7 was mounted on a peripheral edge portion of a negative cap 3 made from stainless steel.

The negative cap 3 provided with the sealing gasket 7 was stacked on the positive can 2 containing the positive pellet 4, separator 6, negative active material 5, and the specific amount of the non-aqueous electrolyte, and was fitted in and crimped to the positive can 2, to produce a coin cell 1 having an outer size of 20 mm and a height of 1.6 mm.

### (Comparative Examples 5-1 to 5-4)

A coin cell 1 was produced in the same manner as that in Examples 5-1 to 5-8 except that the content of the graphite powder as the conductive agent in Example 5-1 was changed to a value in a range of 1 to 4 wt%.

### (Comparative Examples 5-5 to 5-10)

A coin cell 1 was produced in the same manner as that in Examples 5-1 to 5-8 except that the content of the graphite powder as the conductive agent in Example 5-1 was changed to a value in a range of 31 to 40 wt%.

The compositions of the positive mixes and the filled amounts of the positive mixes in Examples 5-1 to 5-8 and Comparative Examples 5-1 to 5-10 are shown in Table 12.

**Table 12**

| | Composition of Positive Mix (wt%) | | | Filled Amount of Positive Mix (g/cell) |
|---|---|---|---|---|
| | Approximately Spherical β-type NiOOH | SP-20 | PVdF | |
| Comparative Example 5-1 | 97 | 1 | 2 | 0.127 |
| Comparative Example 5-2 | 96 | 2 | 2 | 0.125 |
| Comparative Example 5-3 | 95 | 3 | 2 | 0.123 |
| Comparative Example 5-4 | 94 | 4 | 2 | 0.121 |
| Example 5-1 | 93 | 5 | 2 | 0.119 |
| Example 5-2 | 92 | 6 | 2 | 0.118 |
| Example 5-3 | 90 | 8 | 2 | 0.114 |
| Example 5-4 | 88 | 10 | 2 | 0.112 |
| Example 5-5 | 83 | 15 | 2 | 0.106 |
| Example 5-6 | 78 | 20 | 2 | 0.100 |
| Example 5-7 | 73 | 25 | 2 | 0.095 |
| Example 5-8 | 68 | 30 | 2 | 0.091 |
| Comparative Example 5-5 | 67 | 31 | 2 | 0.090 |
| Comparative Example 5-6 | 66 | 32 | 2 | 0.089 |
| Comparative Example 5-7 | 65 | 33 | 2 | 0.088 |
| Comparative Example 5-8 | 64 | 34 | 2 | 0.087 |
| Comparative Example 5-9 | 63 | 35 | 2 | 0.086 |
| Comparative Example 5-10 | 58 | 40 | 2 | 0.083 |

The coin cell 1 produced in each of Examples 5-1 to 5-8 and Comparative Examples 5-1 to 5-10 has a feature that an open-circuit voltage in a state immediately after production is about 3.5 V, and the voltage is rapidly reduced by discharge, and is nearly kept at an even potential ranging from about 1.0 to 1.2 V.

Accordingly, the discharge test of the coin cell 1 for examining discharge characteristics is made in a state excluding the initial discharge portion by preliminary discharge. The preliminary discharge is performed at a constant current of 1 mA until the cell voltage becomes 1.3 V, and is left for one day.

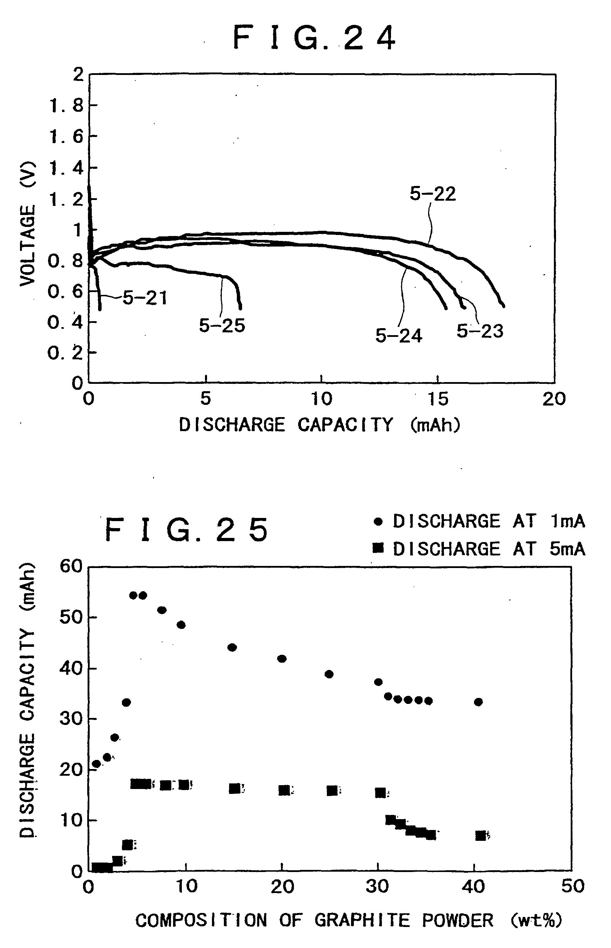

After the preliminary discharge, a discharge test is made by performing discharge at a constant current of 1 mA until the cell voltage becomes 0.5 V. A change in discharge capacity of the coin cell 1 in each of Examples 5-1, 5-6, and 5-8 and Comparative Examples 5-1 and 5-10 as typical examples in such a discharge test performed at a constant current of 1 mA was measured. The result is shown in FIG. 23. A change in discharge capacity of the coin cell 1 in each of Examples 5-1, 5-6, and 5-8 and Comparative Examples 5-1 and 5-10 in the discharge test performed at a constant current of 5 mA was also measured. The result is shown in FIG. 24. The discharge capacity of the coin cell 1 in each of Examples 5-1 to 5-8 and Comparative Examples 5-1 to 5-10 in the discharge test is shown in Table 13. A change in discharge capacity depending on the content of the graphite powder for the coin cell in each of Examples 5-1 to 5-8 and Comparative Examples 5-1 to 5-10 is shown in FIG. 25. In the figures, curves 5-11 and 5-21 each show the change in discharge capacity in Comparative Example 5-1; curves 5-12 and 5-22 each show the change in discharge capacity in Example 5-1; curves 5-13 and 5-23 each show the change in discharge capacity in Example 5-6; curves 5-14 and 5-24 each show the change in discharge capacity in Example 5-8; and curves 5-15 and 5-25 each show the change in discharge capacity in Comparative Example 5-10.

**Table 13**

| | Discharge Capacity (mAh) | |
|---|---|---|
| | Discharge at 1 mA | Discharge at 5 mA |
| Comparative Example 5-1 | 20.0 | 0.5 |
| Comparative Example 5-2 | 21.7 | 0.6 |
| Comparative Example 5-3 | 26.2 | 2.1 |
| Comparative Example 5-4 | 33.2 | 5.5 |
| Example 5-1 | 55.1 | 17.7 |
| Example 5-2 | 55.1 | 17.6 |
| Example 5-3 | 52.1 | 17.0 |
| Example 5-4 | 48.9 | 17.0 |
| Example 5-5 | 44.6 | 16.3 |
| Example 5-6 | 42.0 | 16.1 |
| Example 5-7 | 39.3 | 15.7 |
| Example 5-8 | 37.7 | 15.3 |
| Comparative Example 5-5 | 37.3 | 10.1 |
| Comparative Example 5-6 | 36.9 | 8.9 |
| Comparative Example 5-7 | 36.7 | 7.7 |
| Comparative Example 5-8 | 36.5 | 7.3 |
| Comparative Example 5-9 | 36.4 | 6.9 |
| Comparative Example 5-10 | 36.0 | 6.5 |

As is apparent from FIGS. 23 and 24, in each case of discharge at 1m A and discharge at 5 mA, the discharge capacity of the coin cell in each of Examples 5-1, 5-6, and 5-8 in which the content of the graphite powder as the conductive agent is set in a range of 5 to 30 wt% is larger than that of the coin cell in each of Comparative Examples 5-1 and 5-10.

As is also apparent from Table 13 and FIG. 25, in each case of discharge at 1 mA and 5 mA, the discharge capacity becomes large when the content of the graphite powder as the conductive agent is in a range of 5 to 30 wt%. In particular, in the discharge test at the larger constant current of 5 mA, the difference in discharge capacity between the coin cell in each of Examples 5-1 to 5-8 and the coin cell in each of Comparative Examples 5-1 to 5-10 becomes large. This means that the effect of specifying the content of the graphite powder in a range of 5 to 30 wt% becomes large as the load, that is, the power consumption becomes large.

The reason why the discharge capacity is reduced when the content of the graphite powder as the conductive agent exceeds 30 wt% may be possibly due to the facts that the filled amount of the nickel oxyhydroxide as a main component of the positive mix becomes small as the content of the conductive agent becomes large, and that an excessive amount of the graphite powder obstructs the reactivity of the nickel oxyhydroxide with lithium as the negative active material.

In this embodiment, the β-type nickel oxyhydroxide having the approximately spherical particle shape 8 is used as the positive active material; however, even in the case of using the β-type nickel oxyhydroxide having the rock-like (non-spherical) particle shape 9 or the γ-type nickel oxyhydroxide having the approximately spherical particle shape 8 or the rock-like (non-spherical) particle shape 9, the discharge capacity of the coin cell 1 can be increased by specifying the content of the graphite powder as the conductive agent in a range of 5 to 30 wt%.

As is apparent from Table 13, the discharge capacity of the cell in Example 5-6 upon discharge at a constant current of 1 mA is 42.0 mAh, and as a result of calculation based on this discharge capacity value, the discharge capacity per filled amount (wt%) of the positive active material becomes about 538 mAh/g (= 42.0/0.1/0.78). It is apparent to those skilled in the art that such a value is larger than that obtained by a cell using a conventional positive material.

Accordingly, in the case of producing a primary cell using nickel oxyhydroxide, it is desirable to specify the content of a graphite powder as a conductive agent in a range of 5 to 30 wt% on the basis of the total weight of a positive mix.

### (Examples 5-9 to 5-17)

A mixture of the β-type nickel oxyhydroxide (β-NiOOH containing no additional different element) having the approximately spherical particle shape 8, a graphite powder (high purity graphite powder available from Nippon Graphite Industries, Ltd. under the trade name of "SP-20") as a conductive agent, and polyvinylidene fluoride (PVdF) (available from Kureha Chemical Industry Co. Ltd. under the trade name of "Kureha KF Polymer PVdF #1300") as a binder was dispersed in N-methyl-2-pyrrolidone (NMP), to obtain a positive mix slurry.

The content of the graphite powder as the conductive agent was set to 20 wt% on the basis of the total weight of the positive mix, and the content of the polyvinylidene fluoride (PVdF) as the binder was changed in a range of 1 to 10 wt% on the basis of the total weight of the positive mix.

A coin cell 1 was produced in the same manner as that in Examples 5-1 to 5-8, for example, in terms of production of a positive mix, molding of a pellet, and the like, expect that the content of the polyvinylidene fluoride (PVdF) as the binder was changed in a range of 1 to 10 wt%.

### (Comparative Examples 5-11 to 5-16)

A coin cell 1 was produced in the same manner as that in Examples 5-9 to 5-17 except that the content of the polyvinylidene fluoride as the binder in Examples 5-9 to 5-17 was changed to a value in a range of 0 to 0.9 wt%

### (Comparative Examples 5-17 to 5-22)

A coin cell 1 was produced in the same manner as that in Examples 5-9 to 5-17 except that the content of the polyvinylidene fluoride as the binder in Examples 5-9 to 5-17 was changed to a value in a range of 10.1 to 11 wt%

The compositions of the positive mixes and the filled amounts of the positive mixes in Examples 5-9 to 5-17 and Comparative Examples 5-11 to 5-22 are shown in Table 14.

**Table 14**

| | Composition of Positive Mix (wt%) | | | Filled Amount of Positive Mix (g/cell) |
|---|---|---|---|---|
| | β-type NiOOH | SP-20 | PVdF #1300 | |
| Comparative Example 5-11 | 80.0 | 20 | 0.0 | 0.1 |
| Comparative Example 5-12 | 79.5 | 20 | 0.5 | 0.1 |
| Comparative Example 5-13 | 79.4 | 20 | 0.6 | 0.1 |
| Comparative Example 5-14 | 79.3 | 20 | 0.7 | 0.1 |
| Comparative Example 5-15 | 79.2 | 20 | 0.8 | 0.1 |
| Comparative Example 5-16 | 79.1 | 20 | 0.9 | 0.1 |
| Example 5-9 | 79.0 | 20 | 1.0 | 0.1 |
| Example 5-10 | 78.5 | 20 | 1.5 | 0.1 |
| Example 5-11 | 78.0 | 20 | 2.0 | 0.1 |
| Example 5-12 | 77.0 | 20 | 3.0 | 0.1 |
| Example 5-13 | 75.0 | 20 | 5.0 | 0.1 |
| Example 5-14 | 73.0 | 20 | 7.0 | 0.1 |
| Example 5-15 | 72.0 | 20 | 8.0 | 0.1 |
| Example 5-16 | 71.0 | 20 | 9.0 | 0.1 |
| Example 5-17 | 70.0 | 20 | 10.0 | 0.1 |
| Comparative Example 5-17 | 69.9 | 20 | 10.1 | 0.1 |
| Comparative Example 5-18 | 69.8 | 20 | 10.2 | 0.1 |
| Comparative Example 5-19 | 69.7 | 20 | 10.3 | 0.1 |
| Comparative Example 5-20 | 69.6 | 20 | 10.4 | 0.1 |
| Comparative Example 5-21 | 69.5 69.5 | 20 | 10.5 | 0.1 |
| Comparative Example 5-22 | 69.0 | 20 | 11.0 | 0.1 |

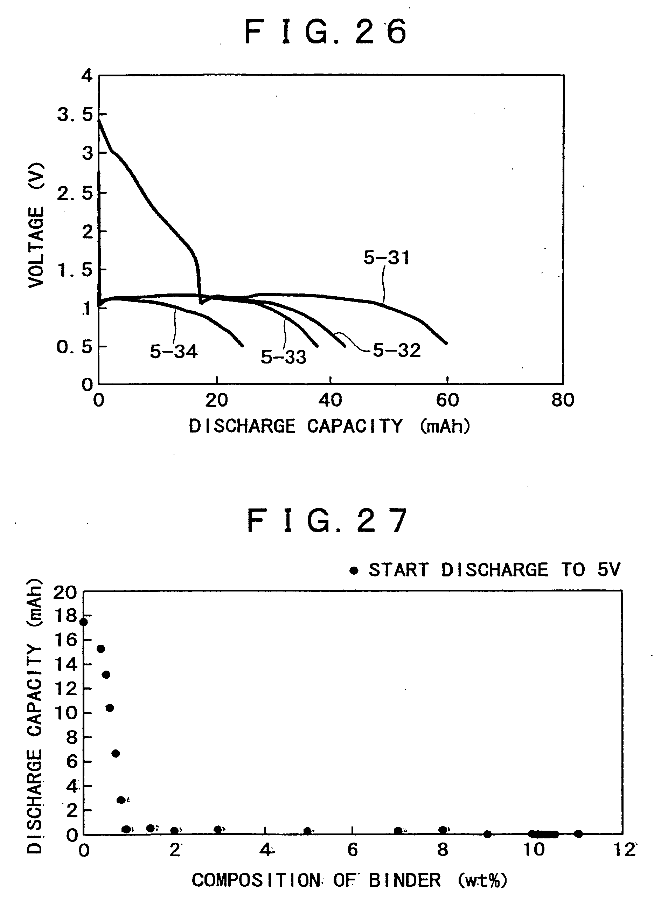

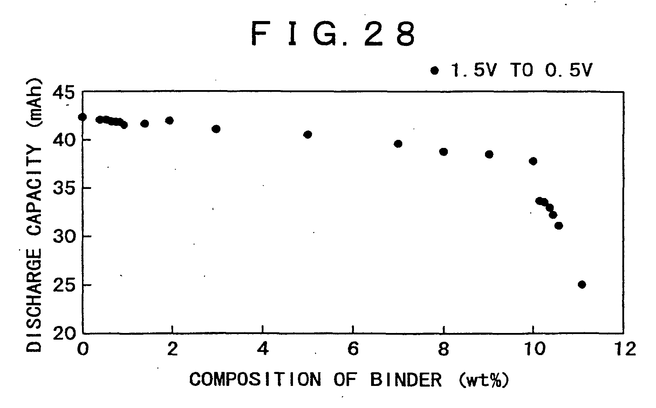

The coin cell 1 in each of Examples 5-9 to 5-17 and Comparative Examples 5-1 to 5-22 was subjected to a discharge test. The discharge test was made by performing discharge at a constant current of 1 mA until the cell voltage became 0.5 V. A discharge capacity of the coin cell in each of Examples 5-9 to 5-17 and Comparative Examples 5-1 to 5-22 is shown in Table 15. A change in discharge capacity of the coin cell 1 in each of Examples 5-11 and 5-17 and Comparative Examples 5-11 and 5-22 as typical examples is shown in FIG. 26. A change in discharge capacity depending on the composition of the binder in the positive mix in a high voltage range of the start of discharge to 1.5 V is shown in FIG. 27 and a change in discharge capacity depending on the composition of the binder in the positive mix in a low voltage range after 1.5 V is shown in FIG. 28. In the figures, a curve 5-31 shows the change in discharge capacity in Comparative Example 5-11; a curve 5-32 shows the change in discharge capacity in Example 5-11; a curve 5-33 shows the change in discharge capacity in Example 5-17; and a curve 5-34 shows the change in discharge capacity in Comparative Example 5-22.

**Table 15**

| | Discharge Capacity (mAh) | |
|---|---|---|
| | Start to 1.5 V | 1.5 V to 0.5 V |
| Comparative Example 5-11 | 17.2 | 42.5 |
| Comparative Example 5-12 | 15.3 | 42.3 |
| Comparative Example 5-13 | 13.1 | 42.3 |
| Comparative Example 5-14 | 10.6 | 42.0 |
| Comparative Example 5-15 | 6.7 | 42.1 |
| Comparative Example 5-16 | 2.9 | 42.0 |
| Example 5-9 | 0.5 | 41.8 |
| Example 5-10 | 0.4 | 41.9 |
| Example 5-11 | 0.3 | 42.0 |
| Example 5-12 | 0.3 | 41.2 |
| Example 5-13 | 0.2 | 40.6 |
| Example 5-14 | 0.2 | 39.5 |
| Example 5-15 | 0.1 | 38.7 |
| Example 5-16 | 0.1 | 38.3 |
| Example 5-17 | 0.1 | 37.6 |
| Comparative Example 5-17 | 0.0 | 33.5 |
| Comparative Example 5-18 | 0.0 | 33.3 |
| Comparative Example 5-19 | 0.0 | 32.8 |
| Comparative Example 5-20 | 0.0 | 32.0 |
| Comparative Example 5-21 | 0.0 | 31.0 |
| Comparative Example 5-22 | 0.0 | 24.9 |

As is apparent from Table 15 and FIG. 28, for the coin cell in each of Examples 5-9 to 5-17 and Comparative Examples 5-17 to 5-22 in which the content of the binder in the positive mix is equal to or more than 1 wt%, the high potential region immediately after the start of discharge almost disappears, and for the coin cell in each of Comparative Examples 5-17 to 5-22 in which the content of the binder in the positive mix is more than 10 wt%, the discharge capacity in the low potential region is rapidly reduced.

It is also apparent from FIGS. 27 and 28 that when the content of the binder in the positive mix is equal to or more than 1 wt%, the high potential region immediately after the start of discharge almost disappears and that when the content of the binder in the positive mix is more than 10 wt%, the discharge capacity in the low potential region is rapidly reduced.

The reason why the discharge capacity of the non-aqueous primary cell becomes small when the content of the binder in the positive mix is more than 10 wt% is that since the binder is irrelevant to the discharge capacity, the amount of the positive active material fillable in the non-aqueous primary cell becomes small as the content of the binder becomes large or an excessive amount of the binder obstructs mass-transfer between electrodes along with the discharge reaction, to thereby reduce the discharge capacity of the non-aqueous primary cell.

Accordingly, it is possible to shorten the discharge time in the high potential region without reducing the discharge capacity in the low potential region by specifying the content of the binder in the positive mix in a range of 1 to 10 wt%. This makes it possible to shorten the time required for preliminary discharge, and hence to enhance the efficiency of operation.

While the non-aqueous primary cell of the present invention has been described by example of the coin cell 1, the present invention is not limited thereto but may be applicable to any other type of the non-aqueous primary cell using the β-type nickel oxyhydroxide having the approximately spherical particle shape 8.

### Industrial Applicability

According to a non-aqueous primary cell of the present invention, since β-type nickel oxyhydroxide having an approximately spherical particle shape is used for a positive active material, it is possible to increase the filled amount of the positive active material and hence to increase the discharge capacity and lower the operating voltage.

Since the β-type nickel oxyhydroxide having an approximately spherical particle shape is used for a positive active material and either of cobalt, copper, and neodymium is dissolved as a solid-solution in the β-type nickel oxyhydroxide, it is possible to further increase the filled amount of the positive active material and hence to further increase the discharge capacity and further lower the operating voltage. According to a method of producing an active material for a cell in accordance with the present invention, it is possible to obtain nickel oxyhydroxide in which a specific amount of a specific metal is dissolved as a solid-solution by simple production steps.

Since a conductor and a binder are contained in nickel oxyhydroxide as a main component of a positive active material, it is possible to increase the discharge capacity by specifying the content of the conductor in a specific range, and to shorten the time for preliminary discharge by specifying the content of the binder in a specific range.

Since γ-type nickel oxyhydroxide having an approximately spherical particle shape is used as a positive active material, it is possible to increase the filled amount of the positive active material; and hence to increase the discharge capacity and lower the operating voltage.

## Claims

1. A non-aqueous primary cell containing:
a positive active material containing nickel oxyhydroxide as a main component and a negative active material composed of a light metal, said positive and negative active materials being disposed between a positive terminal and a negative terminal while being separated from each other by means of a separator; and
a non-aqueous electrolyte;
wherein said nickel oxyhydroxide has an approximately spherical particle shape, and said light metal is selected from lithium, a lithium alloy, magnesium, sodium, potassium, calcium, and aluminum.

2. A non-aqueous primary cell according to claim A, wherein said nickel oxyhydroxide comprises β-type nickel oxyhydroxide having an approximately spherical particle shape.

3. A non-aqueous primary cell according to claim 1, wherein zinc or yttrium is dissolved as a solid-solution in said β-type nickel oxyhydroxide.

4. A non-aqueous primary cell according to claim 1 or 2, wherein the solid-solution amount of zinc in said positive active material is in a range of 0.5 wt% or more on the basis of the weight of said β-type nickel oxyhydroxide.

5. A non-aqueous primary cell according to claim 1 or 2, wherein the solid-solution amount of yttrium in said positive active material is in a range of 0.2 wt% or more on the basis of the weight of said β-type nickel oxyhydroxide.

6. A non-aqueous primary cell according to claim 3, wherein the solid-solution amount of zinc dissolved as a solid-solution in said positive active material is in a range of 0.5 to 8.0 wt%; and
said light metal as said negative electrode comprises lithium or a lithium alloy.

7. A non-aqueous primary cell according to claim 4, wherein the solid-solution amount of yttrium dissolved as a solid-solution in said positive active material is in a range of 0.2 to 3.0 wt%; and
said light metal as said negative electrode comprises lithium or a lithium alloy.

8. A non-aqueous primary cell according to claim 1, wherein said positive active material comprises β-type nickel oxyhydroxide in which a specific amount of either of cobalt, copper, and neodymium is dissolved as a solid-solution.

9. A non-aqueous primary cell according to claim 8, wherein when cobalt is dissolved as a solid-solution in said positive active material, the solid-solution amount of cobalt is in a range of 0.5 to 16.0 wt% on the basis of the weight of said β-type nickel oxyhydroxide;
when copper is dissolved as a solid-solution in said positive active material, the solid-solution amount of copper is in a range of 0.5 wt% or more; and
when neodymium is dissolved as a solid-solution in said positive active material, the solid-solution amount of neodymium is in a range of 0.2 wt% or more.

10. A method of producing an active material used as a positive active material for a cell, comprising the steps of:
mixing nickel sulfate or nickel nitrate and a metal compound in a water-solution;
mixing the resultant water-solution with an ammonium ion imparting compound and an alkali water-solution, and stirring the mixture, to produce nickel hydroxide containing a metal dissolved therein as a solid-solution; and
mixing said nickel hydroxide containing said metal dissolved as a solid-solution in a mixed solution of an alkali water-solution and an oxidizer, thereby chemically oxidizing said nickel hydroxide, to obtain nickel oxyhydroxide.

11. A method of producing a non-aqueous primary cell according to claim 10, wherein said metal compound comprises a compound of either of cobalt, copper, and neodymium.

12. A non-aqueous primary cell according to claim 1, which contains a positive active material containing nickel oxyhydroxide as a main component and a negative active material composed of a light metal, said positive and negative active materials being disposed between a positive terminal and a negative terminal while being separated from each other by means of a separator; and a non-aqueous electrolyte;
wherein said nickel oxyhydroxide comprises γ-type nickel oxyhydroxide having an approximately spherical particle shape.

13. A non-aqueous primary cell according to claim 12, wherein the particle distribution of said γ-type nickel oxyhydroxide is in a range of 5 to 70 µm and an average particle size of said γ-type nickel oxyhydroxide is in a range of 15 to 25 µm.

14. A non-aqueous primary cell, wherein
said positive active material comprises nickel oxyhydroxide having an approximately spherical or rock-like particle shape;
a positive mix forming said positive active material contains at least a graphite powder as a conductive agent, and a binder;
the content of said conductive agent is in a range of 5 to 30 wt% on the basis of the total weight of said positive mix; and
the content of said binder is in a range of 1 to 10 wt% on the total weight of said positive mix.

15. A non-aqueous primary cell according to claim 14, wherein said binder contains at least one kind or more selected from fluorocarbon resins including polytetrafluoroethylene and vinylidene fluoride and butadiene-styrene resins.

16. A non-aqueous primary cell according to claim 14, wherein said light metal is selected from lithium, a lithium alloy, magnesium, sodium, potassium, calcium, and aluminum.
